# EUROPEAN PATENT APPLICATION

(11) **EP 2 924 592 A2**
(43) Date of publication of application: **30.09.2015**
(21) Application number: 15156812.8
(22) Date of filing: 26.02.2015
(51) Int. Cl.: G06F 17/30

(54) **Information processing terminal and information processing method**

(30) Priority: 28.03.2014 JP 2014069149
(71) Applicant: FUJITSU LIMITED, Kawasaki-shi, Kanagawa 211-8588 (JP)
(72) Inventor: Ushiki, Kazumasa, Kawasaki-shi, Kanagawa 211-8588 (JP); Tsunoda, Tadanobu, Kawasaki-shi, Kanagawa 211-8588 (JP); Itakura, Kota, Kawasaki-shi, Kanagawa 211-8588 (JP); Fujii, Akira, Kawasaki-shi, Kanagawa 211-8588 (JP)
(74) Representative: Wilding, Frances Ward

(57) **Abstract**

An information processing system including an information processing terminal, a content management device and an information management device, connected to each other through a network, is disclosed, wherein the terminal transmits ID information and a first URL to the content management device, and receives content data of the first URL from the content management device; and the content management device transmits the first URL and the ID information received from the terminal to the information management device, and receives one or more second URLs, for a script that causes the terminal to execute processing related to the content data of the first URL from the information management device, inserts reference information for the second URL into the content data of the first URL that are stored in the content management device, and sends back the content data into which the reference information is inserted to the terminal.

## Description

### FIELD

The embodiments discussed herein are related to an information processing system, an information processing terminal, a content management device, and an information processing method.

### BACKGROUND

A Web content includes a script such as HyperText Markup Language (HTML), Cascading Style Sheets (CSS), and JavaScript (registered trademark). The script may dynamically change the display state of a display element that is defined in HTML.

Generally, a correspondence relationship between HTML and a script is static. For example, it is desirable that reference information for a script file is described in an HTML file.

Japanese Laid-open Patent Publication No. 2012-49771 is one of the related art of such kind of system.

On the other hand, recently, a mobile terminal such as a smartphone and a tablet terminal has been prevailing, and a user may browse a Web content easily as long as connection of a network is allowed at the location. That is, a state in which the user browses the Web content has been diversified.

However, when the correspondence relationship between HTML and a script is static, for example, it is difficult to cause a Web content to become different depending on the state of the user such as the current date and time and/or the position of the user.

Therefore, it is desirable to provide a content that corresponds to the state of the user.

### SUMMARY

According to an embodiment of an aspect of the invention, an information processing system including an information processing terminal, a content management device and an information management device, connected to each other through a network, is disclosed, wherein the terminal transmits ID (identification) information and a first URL to the content management device, and receives content data of the first URL from the content management device; and the content management device transmits the first URL and the ID information received from the terminal to the information management device, and receives one or more second URLs, for a script that causes the terminal to execute processing related to the content data of the first URL from the information management device, inserts reference information for the second URL, into the content data of the first URL that are stored in the content management device, and sends back the content data into which the reference information is inserted to the terminal.

According to an embodiment of an aspect of the invention, the user of the terminal can be provided with contents that correspond to the state of the user.

### BRIEF DESCRIPTION OF DRAWINGS

FIG. 1 is a diagram illustrating a configuration example of an information processing system according to a first embodiment;
FIG. 2 is a diagram illustrating a hardware configuration example of a mobile terminal according to the first embodiment;
FIG. 3 is a diagram illustrating a function configuration example of an information processing system according to the first embodiment;
FIG. 4 is a sequence diagram illustrating an example of a processing procedure that is executed by the information processing system according to the first embodiment;
FIG. 5 is a diagram illustrating a configuration example of an application information storage unit;
FIG. 6 is flowchart illustrating an example of a processing procedure of insertion processing of a script Uniform Resource Locator (URL) in the first embodiment;
FIG. 7 is a diagram illustrating an insertion example of the script URL into an HTML file in the first embodiment;
FIG. 8 is a diagram illustrating a function configuration example of an information processing system according to a second embodiment;
FIG. 9 is a sequence diagram illustrating an example of a processing procedure that is executed by the information processing system according to the second embodiment;
FIG. 10 is a diagram illustrating an insertion example of a script URL into an HTML file by a content server according to the second embodiment;
FIG. 11 is a flowchart illustrating an example of a processing procedure of edition processing of the HTML file in the second embodiment;
FIG. 12 is a diagram illustrating a system configuration example in a third embodiment;
FIG. 13 is a diagram illustrating an example of a display image of a Web content in an integration display;
FIG. 14 is a diagram illustrating function configuration examples of a mobile terminal and a display terminal according to the third embodiment;
FIG. 15 is a diagram illustrating a relationship between HTML, DOM, CSS, and a script;
FIG. 16 is a sequence diagram illustrating an example of a processing procedure that is executed for an HTML file into which a script URL has been inserted;
FIG. 17 is a sequence diagram illustrating an example of a processing procedure that is executed depending on reading of a synchronous data distribution script in the mobile terminal;
FIG. 18 is a diagram illustrating examples of DOM data and style definition data;
FIG. 19 is a diagram illustrating a generation example of an event notification script based on an event handler;
FIG. 20 is a diagram illustrating display position information;
FIG. 21 is a sequence diagram illustrating an example of a processing procedure that is executed depending on an operation by a user for an image that is displayed based on a Web content;
FIG. 22 is a diagram illustrating an example of difference data;
FIG. 23 is a flowchart illustrating an example of a processing procedure of drawing processing of a Web content by a mobile terminal;
FIG. 24 is a flowchart illustrating an example of a processing procedure that is executed by the mobile terminal depending on reading of a synchronous data distribution script;
FIG. 25 is a flowchart illustrating an example of a processing procedure of initial information generation processing;
FIG. 26 is a flowchart illustrating an example of a processing procedure of event standby processing;
FIG. 27 is a flowchart illustrating an example of a processing procedure that a synchronous data reception script causes a display terminal to execute; and
FIG. 28 is a flowchart illustrating an example of a processing procedure that an event notification script causes a display terminal to execute.

### DESCRIPTION OF EMBODIMENTS

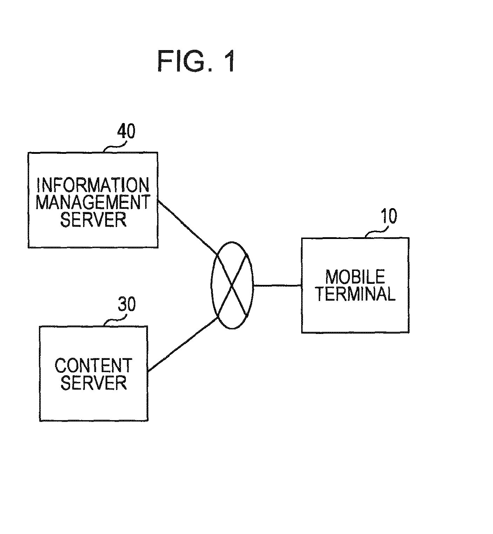

Embodiments are described below, by way of example only, with reference to drawings. FIG. 1 is a diagram illustrating a configuration example of an information processing system according to a first embodiment. In the information processing system illustrated in FIG. 1, a mobile terminal 10 may be connected to one or more content servers 30, an information management server 40, and the like, through a network such as the Internet or a Local Area Network (LAN).

The mobile terminal 10 is a mobile type terminal such as a mobile phone, a smartphone, or a tablet terminal. The mobile terminal 10 includes a function that downloads (obtains) a Web content from the content server 30 and displays the Web content. The Web content is display data that is allowed to be browsed through a generic Web browser. The Web content includes HTML, CSS, a script, and the like. The CSS and the script may be defined in a file that is different from an HTML file or may be included in the HTML file. The script is, for example, JavaScript (registered trademark). Due to such a script, the display state of the Web content may be caused to become dynamic. That is, due to the script, the display state of the Web content may be changed in response to occurrences of various events without downloading a new Web content (without transitioning the Web content). The display state of the Web content is a display state of an image (screen) that is displayed based on the Web content. As an example of the various events, there is an operation by the user for the image that is displayed based on the Web content. A change in the display state of the Web content depending on an event depends on definition of the Web content. The Web content is referred to as a Web application or a Webpage.

The content server 30 is a computer that sends back a Web content corresponding to a URL that is specified by a download request of the Web content through the mobile terminal 10. A Web content stored in the mobile terminal 10 in advance may be set as a display target.

The information management server 40 is a computer that manages information to be used to support provision of a Web content corresponding to a context of the user of the mobile terminal 10 (hereinafter referred to as "application information"). The context is a concept that indicates, for example, the state of the user such as the current location, the current date and time, the current weather, the current psychological state of the user, and the like, and also includes an ID of the mobile terminal and an ID of the user. The application information is stored by associating information that indicates the context (hereinafter referred to as "context ID"), a URL of a Web content corresponding to or being suitable for the context (hereinafter referred to as "content URL"), with a URL of a script that causes the mobile terminal 10 to execute processing for the Web content (hereinafter referred to as "script URL").

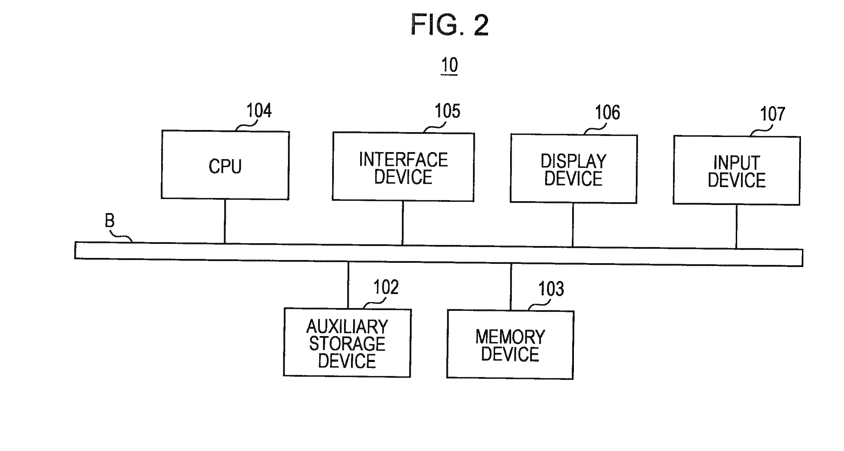

FIG. 2 is a diagram illustrating a hardware configuration example of the mobile terminal according to the first embodiment. The mobile terminal 10 illustrated in FIG. 2 includes an auxiliary storage device 102, a memory device 103, a central processing unit (CPU) 104, an interface device 105, a display device 106, and an input device 107 that are connected to each other through a bus B.

A program that achieves processing in the mobile terminal 10 is installed to the auxiliary storage device 102. The auxiliary storage device 102 stores the installed program, a desired file, data, and the like.

The memory device 103 reads the program from the auxiliary storage device 102 and stored the program when a start-up instruction of the program is executed. The CPU 104 achieves a function of the mobile terminal 10 in accordance with the program stored in the memory device 103. The interface device 105 is used as an interface that is used to perform connection to the network. The display device 106 includes a display D1, and displays an image and the like based on a Web content. The input device 107 is a button, a touch-screen, or the like, and accepts an operation instruction from the user. The content server 30 and the information management server 40 may also include hardware that is similar to that of FIG. 2. However, each of the content server 30 and the information management server 40 may not include the display device 106 and the input device 107.

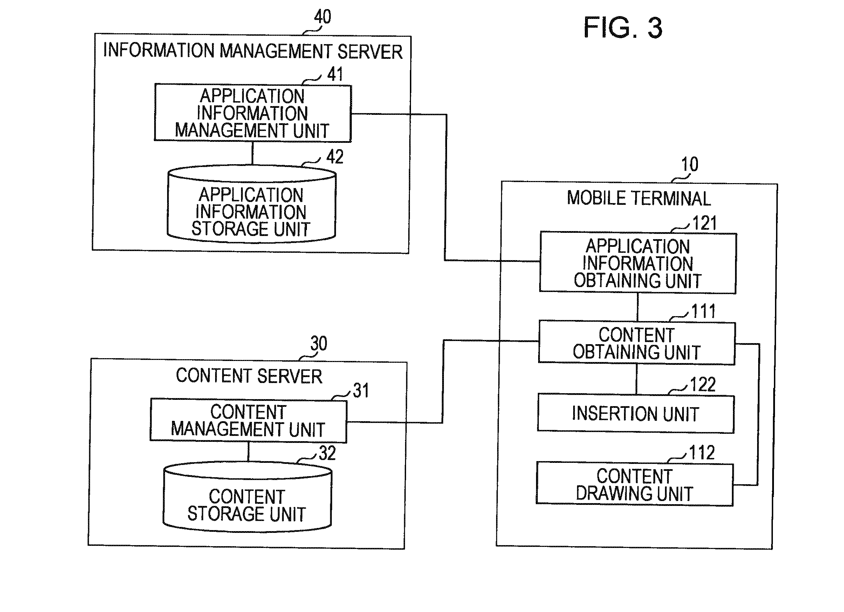

FIG. 3 is a diagram illustrating a function configuration example of the information processing system according to the first embodiment.

In FIG. 3, the content server 30 includes a content management unit 31 and a content storage unit 32. The content management unit 31 is achieved by processing that one or more programs that are installed to the content server 30 cause the CPU of the content server 30 to execute. The content storage unit 32 may be obtained, for example, by an auxiliary storage device or the like of the content server 30.

The content storage unit 32 stores a file group constituting a Web content. The content management unit 31 sends back an HTML file and the like of a URL that is specified by an obtaining request of the Web content from the mobile terminal 10, to the mobile terminal 10, in response to the obtaining request of the Web content.

The information management server 40 includes an application information management unit 41 and an application information storage unit 42. The application information management unit 41 is achieved by processing that one or more programs that are installed to the information management server 40 cause the CPU of the information management server 40 to execute. The application information storage unit 42 may be obtained, for example, by an auxiliary storage device or the like of the information management server 40.

The application information storage unit 42 stores application information. The application information management unit 41 sends back application information that corresponds to a context ID that is specified by an obtaining request of the application information from the mobile terminal 10, in response to the obtaining request of the application information.

The mobile terminal 10 includes application information obtaining unit 121, a content obtaining unit 111, an insertion unit 122, and a content drawing unit 112. Each of the units is achieved by processing that one or more programs that are installed to the mobile terminal 10 (for example, Web browser program) cause the CPU 104 to execute.

The application information obtaining unit 121 obtains application information corresponding to the state of the user of the mobile terminal 10, from the information management server 40. The content obtaining unit 111 obtains an HTML file that constitutes a Web content of a content URL included in the application information, from the content server 30. The insertion unit 122 inserts reference information for a script URL included in the application information, into the HTML file that has been obtained by the content obtaining unit 111, as appropriate. The reference information for the script URL is definition of a <script> tag that includes the script URL (script element).

The content drawing unit 112 executes drawing processing for the HTML file. In the course of the drawing processing, a CSS file, a script file referenced from the HTML file, and the like are downloaded. Thus, when reference information related to the script URL is inserted by the insertion unit 122, a script file of the script URL is downloaded to the mobile terminal 10 and executed. As a result, even when the reference information for the script file of the script URL is not inserted into the HTML file in advance, the script of the script file may be applied to a display element of the HTML file.

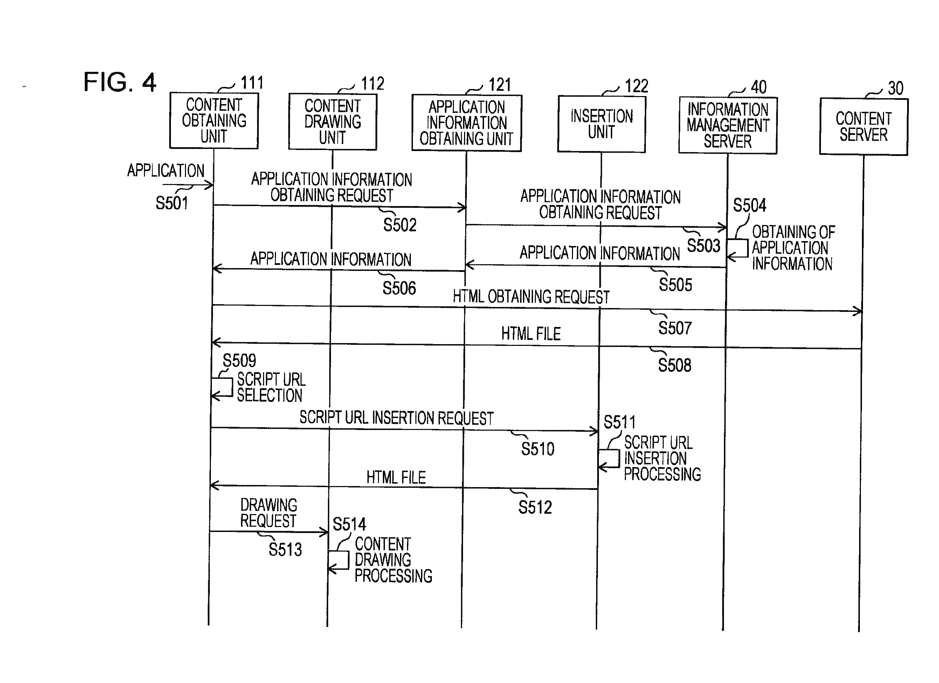

A processing procedure that is executed in the information processing system is described below. FIG. 4 is a sequence diagram illustrating an example of a processing procedure that is executed by the information processing system according to the first embodiment.

In Step S501, a context ID corresponding to the state of the user is notified to the content obtaining unit 111. The notification of the context ID may be performed in response to an input by the user. In this case, information that has been input by the user corresponds to the context ID. Alternatively, the context ID may be notified based on a change in a date and time by a timer function that is built in the mobile terminal 10, a change in the position by a Global Positioning System (GPS) function, reception of radio waves from an access point of a wireless LAN, reading of a Near field communication (NFC) tag, a barcode, or the like. In this case, the date and time, the location information, the identification information of the access point of the wireless LAN, information that has been read from the NFC tag, the barcode, or the like may correspond to the context ID.

Information that is obtained by applying, to a certain format, the information that has been input by the user, or the information such as the date and time, the location information, the identification information of the access point of the wireless LAN, or the information that has been read from the NFC tag, the barcode, or the like may correspond to the context ID.

The content obtaining unit 111 inputs an obtaining request of application information, which includes a context ID, to the application information obtaining unit 121 (S502). The application information obtaining unit 121 transmits the obtaining request to the information management server 40 (S503). The application information management unit 41 of the information management server 40 obtains the application information that is associated with the context ID that is included in the obtaining request, from the application information storage unit 42 (S504).

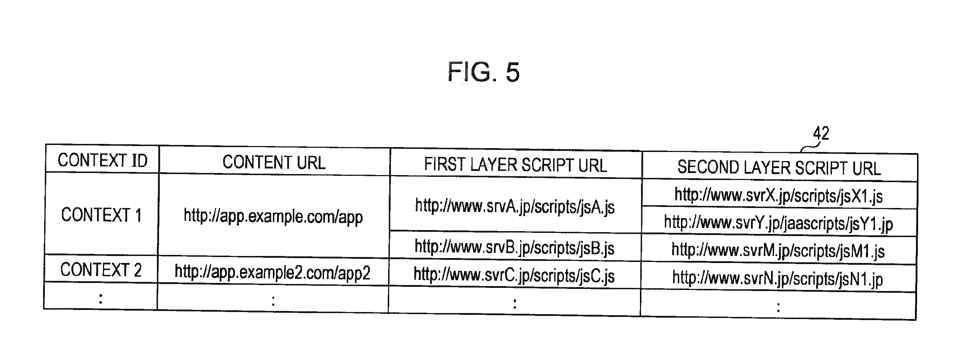

FIG. 5 is a diagram illustrating a configuration example of the application information storage unit 42. As illustrated in FIG. 5, the application information storage unit 42 associates a single content URL and one or more first layer script URLs with a context ID, and stores the context ID and the URLs. In addition, the application information storage unit 42 stores zero or more second layer script URL for each of the first layer script URLs. The one or more content URLs are stored so as to be associated with a single context ID, and one or more contents may be obtained in a certain context.

The content URL is a URL of an HTML file that corresponds to a context of the context ID. The HTML file may be defined using HTML5. The first layer script URL and the second layer script URL are examples of the above-described script URL. The first layer script URL is a URL of a script that causes the mobile terminal 10 to execute processing suitable for the context, for each display element defined by the HTML file so as to be referenced from the HTML file, in the context. That is, by linking or cooperating a script of the first layer script URL (hereinafter referred to as "first layer script") to or with the HTML file of the content URL, an operation of an image that is displayed based on the HTML file may be caused to be further suited to the context. As a result, the convenience of the Web content of the HTML file may be improved.

The first layer script is not referenced from the HTML file in the initial state of the HTML file of the content URL. That is, the HTML file does not include reference information for the first layer script URL in the initial state. However, this does not intend that the HTML file does not include a <script> tag. There is a case in which a script is newly applied to an existing HTML file as an example of the case in which the HTML file of the content URL does not include the reference information for the first layer script URL in the initial state. Alternatively, there is also a case in which a first layer script URL that is referenced from the HTML file is not determined from the beginning in order to change a first layer script that is applied depending on a context, for an identical HTML file. That is, in the application information storage unit 42, an identical content URL and a different first layer script URL may be associated with each of the context IDs that are different from each other.

In addition, in the embodiment, when a plurality of first layer script URLs are associated with a single content URL, it is assumed that the plurality of first layer script URLs have an exclusive or selective relationship with each other. However, first layer scripts of the plurality of first layer script URLs may be applied to an identical HTML file at the same time.

The second layer script URL is an example of the above-described script URL. The second layer script URL is a URL of a script that is utilized (referenced) from the first layer script (hereinafter referred to as "second layer script"). It is difficult to completely deny a possibility that the second layer script URL is referenced from the HTML file of the content URL.

The application information may be set for each user or each of the mobile terminals 10. In this case, in the obtaining request of the application information in Step S503, identification information of the user, which is stored in the mobile terminal 10 (hereinafter referred to as "user ID"), identification information of the mobile terminal 10 (hereinafter referred to as "terminal ID"), or the like, may be included. In Step S504, the application information management unit 41 may obtain application information that corresponds to the user ID or the terminal ID and is associated with the context ID included in the obtaining request. In addition, as the context ID, a URL of an HTML file that is to be referenced by the user in the mobile terminal 10 may be used. At that time, the content URL is transmitted to the information management server 40, and a first layer script URL that is associated with the content URL may be applied to the HTML file.

The application information management unit 41 sends back the obtained application information, to the application information obtaining unit 121 (S505). When the application information obtaining unit 121 receives the application information, the application information obtaining unit 121 outputs the application information to the content obtaining unit 111 (S506).

The content obtaining unit 111 transmits an obtaining request of the HTML file, to a content URL that is included in the application information (S507). The obtaining request is received by the content management unit 31 of the content server 30 of the URL. The content management unit 31 obtains an HTML file of the URL, from the content storage unit 32, and sends back the HTML file to the content obtaining unit 111 (S508).

When a plurality of first layer script URLs is included in the application information, the content obtaining unit 111 causes the display device 106 to display a list screen using each of the first layer script URLs as an option, and accepts the selected first layer script URL that is an insertion target into the HTML file, from the user (S509). In the list screen, an option that indicates any first layer script URL is not inserted into the HTML file may be included.

An explanatory note that is related to a function and the like of each of the first layer script URLs may be displayed instead of the first layer script URL, or displayed with the first layer script URL. As a result, selection of the first layer script URL may be supported. As an example of such an explanatory note, there is a note of "Image of the content is to be displayed on a large-size display in front of the eyes" and the like. The explanatory note may be associated, for example, with the first layer script URL and included in the application information.

When the first layer script URLs do not have an exclusive or selective relationship, all first layer scripts may become insertion targets without execution of the selection by the user. In addition, even when there is a single first layer script URL, the content obtaining unit 111 may cause the user to select whether or not insertion of a first layer script of the first layer script URL is performed.

The content obtaining unit 111 requests the insertion unit 122 to insert the script URL into the HTML file (S510). In the request, the HTML file, the application information that has been obtained in Step S506, and the like, are included.

The insertion unit 122 executes insertion processing of the script URL into the HTML file, in response to the request (S511). After that, the insertion unit 122 outputs the HTML file into which the script URL has been inserted by the insertion processing, to the content obtaining unit 111 (S512).

When there is no target script, the processing of Steps S510 to S512 is not executed. The case in which there is no target script includes a case in which the first layer script URL is not associated with the content URL of the HTML file and a case in which insertion of the first layer script URL is rejected by the user in Step S509.

The content obtaining unit 111 requests the content drawing unit 112 to perform drawing of the HTML file (S513). The content drawing unit 112 executes drawing processing for the HTML file, in response to the request (S514). In the course of the drawing processing, a CSS file, an image file, a script file, and the like that are referenced from the HTML file are downloaded. The content drawing unit 112 applies definition of the downloaded CSS file, the image file, and the like, to definition of the HTML file, and generates an image, and causes the image to be displayed on the display device 106. In addition, the content drawing unit 112 executes processing based on definition of a script that is included in the downloaded script file. The execution timing of the processing based on the script definition depends on the script definition.

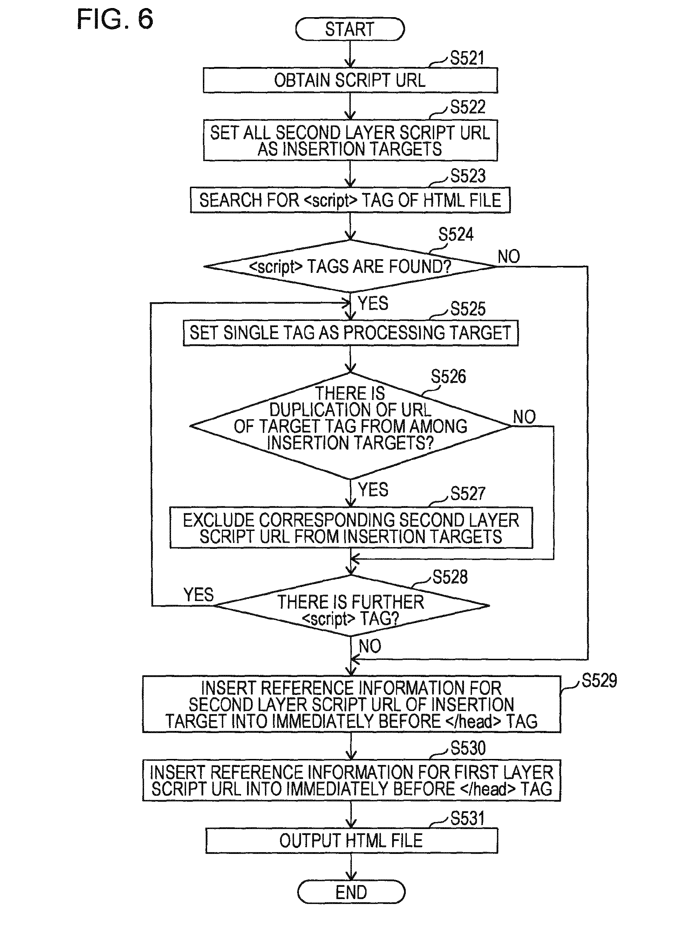

The detailed processing in Step S511 is described below. FIG. 6 is flowchart illustrating an example of a processing procedure of insertion processing of a script URL in the first embodiment.

When insertion of a script URL is requested from the content obtaining unit 111, the insertion unit 122 obtains a first layer script URL and a second layer script URL from application information included in the request (S521). After that, the insertion unit 122 sets each of the obtained second layer script URLs as an insertion target tentatively (S522). After that, the insertion unit 122 searches for all <script> tags that are included in the HTML file (S523). When even a single <script> tag is not found (No in S524), the flow proceeds to Step S529. When one or more <script> tags are found (Yes in S524), the insertion unit 122 sets a single <script> tag from among the found <script> tags, as a processing target (S525). Hereinafter, a <script> tag that is set as a processing target is referred to as "target tag".

The insertion unit 122 determines whether or not there is a URL that is duplicated by a URL of a script that is referenced in the target tag, from among the second layer script URLs that are tentative insertion targets (S526). The duplication of the URLs may be determined by an exact match. In addition, when the URL of the script referenced in the target tag is a relative path, it may be determined that a second layer script URL of an absolute path including the relative path is duplicated by the URL of the script that is referenced in the target tag.

When there is the duplicated second layer script URL (Yes in S526), the insertion unit 122 excludes the second layer script URL from the insertion targets (S527). In a case in which the URL of the script that has been referenced from the HTML file already exists, when reference information for a script of a URL that is the same as the URL is added to the HTML file, the identical script is executed twice at the time of the drawing processing or the like of the HTML file. In this case, it is probable that processing executed by the script becomes unstable. In Step S527, processing is executed in which it is avoided that reference for an identical script is performed twice or more in a single HTML file.

Processing of Step S525 and subsequent steps is executed for all <script> tags that have been found from the HTML file (S528). When the processing of Step S525 and the subsequent steps is completed for all of the <script> tags (No in S528), the insertion unit 122 inserts reference information for the second layer script URL that is included in the insertion target at this time point, into immediately before a </head> tag of the HTML file (S529). After that, the insertion unit 122 inserts reference information for the first layer script URL, into immediately before the </head> tag of the HTML file (S530). After that, the insertion unit 122 outputs the HTML file into which the pieces of reference information for the script URLs have been inserted, to the content obtaining unit 111 (S531).

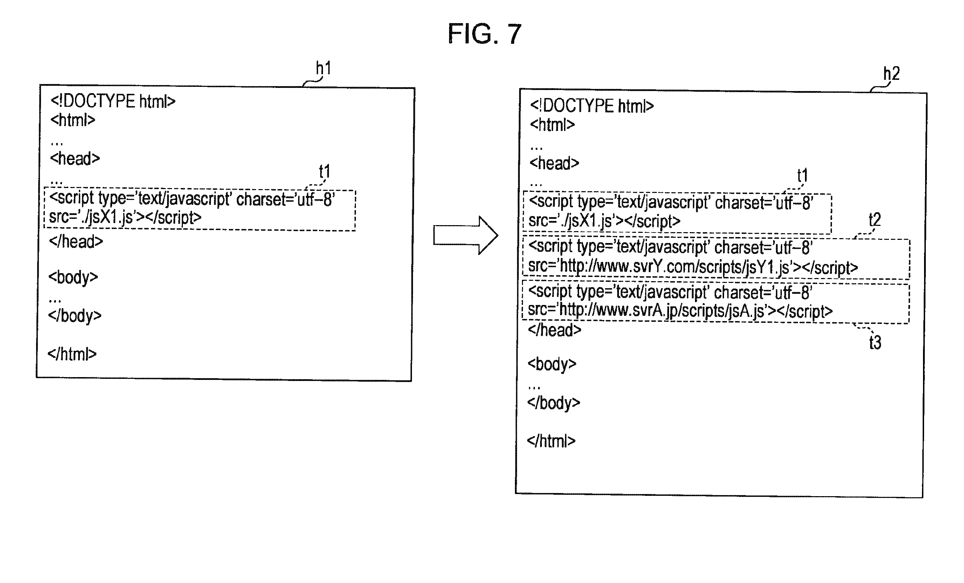

FIG. 7 is a diagram illustrating an insertion example of a script URL into an HTML file in the first embodiment. In FIG. 7, an HTML file h1 is an HTML file into which a script URL is not inserted yet, and an HTML file h2 is an HTML file into which a script URL has been inserted. The example of FIG. 7 corresponds to a case in which a context ID is "context 1", and "http://www.svrA.jp/scripts/jsA.js" is set as an insertion target, from among two first layer script URLs (see FIG. 5) that are associated with the context ID.

In this case, the second layer script URLs are "http://www.svrX.jp/scripts/jsX1.js" and "http://www.svrY.jp/scripts/jsY1.js". From among these URLs, "http://www.svrX.jp/scripts/jsX1.js" is duplicated by a URL that is referenced in a <script> tag t1 of the HTML file h1. Thus, in this case, into the HTML file h2, a <script> tag t2 that is reference information for "http://www.svrY.jp/scripts/jsY1.js" that is not duplicated by the URL, and a <script> tag t3 that is reference information for "http://www.svrA.jp/scripts/jsA.js" that is the first layer script URL are inserted.

In the embodiment, the HTML file is based on a premise that the first layer script URL is not included in the HTML file, but when such a premise is not guaranteed, check whether or not the first layer script URL is duplicated by the URL of the script that is referenced from the HTML file may be performed. When the duplication of the URLs is found in such duplication check, the first layer script URL may be excluded from the insertion targets.

In addition, in preparation for dynamic script reading on the HTML file side, a dedicated script may be prepared that is used to execute detection processing of a duplicated script URL. The mobile terminal 10 inserts the script into the HTML file, executes drawing processing based on the HTML file, identifies a duplicated second layer script URL by the scrip, and then inserts a non-duplicated second layer script URL, into the HTML file. The script that is used to execute the detection processing of a duplicated script URL may be executed, for example, after a time has elapsed in which dynamic script reading by the HTML file is to be completed (for example, few seconds).

As described above, in the first embodiment, an HTML file that corresponds to the context (state) of the user is distributed to the mobile terminal 10. In addition, reference information for a script that corresponds to the context of the user is automatically inserted into the HTML file. As a result, a content may be provided depending on the state of the use.

In addition, the insertion of the reference for the script is automatically performed, so that the necessity that a creator of an existing HTML file modifies the existing HTML may be reduced, in the embodiment.

A display element of a Web content may be defined by a format that is other than an HTML file. For example, using an extensible Markup Language (XML) format, a display element of a Web content may be defined. In addition, in the embodiment, a content other than display data may be applied.

A second embodiment is described below. In the second embodiment, points that are different from the first embodiment are described. Thus, points that are not particularly mentioned here may be similar to those of the first embodiment.

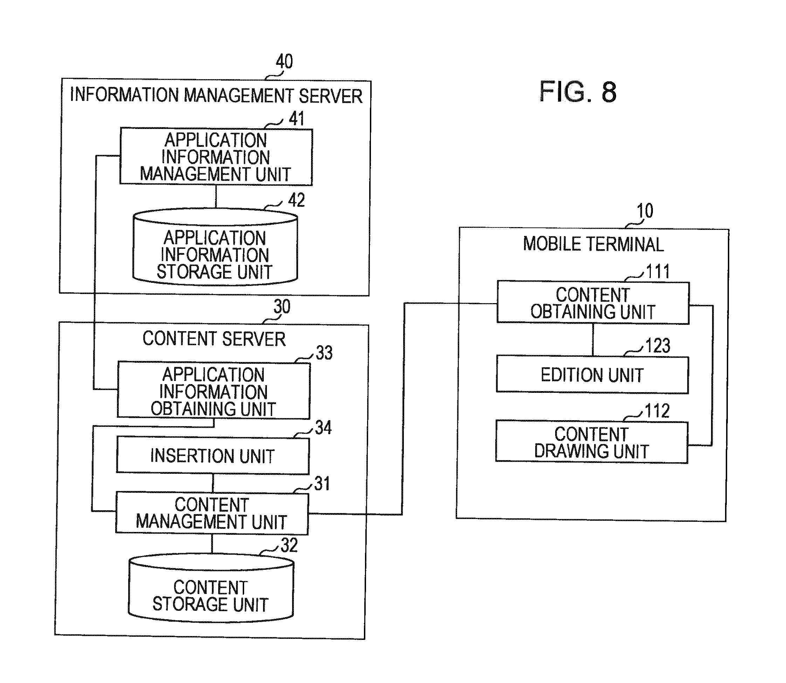

FIG. 8 is a diagram illustrating a function configuration example of an information processing system according to a second embodiment. In FIG. 8, the same symbol is assigned to a portion that is similar to that of FIG. 3, and the description is omitted herein.

In FIG. 8, the content server 30 further includes an application information obtaining unit 33 and an insertion unit 34. The application information obtaining unit 33 obtains application information that corresponds to a context ID that is included in an obtaining request of a Web content from the mobile terminal 10, from the information management server 40. The insertion unit 34 inserts a script URL that is included in the application information that is obtained by the application information obtaining unit 33, into an HTML file of the obtaining request of the Web content from the mobile terminal 10. That is, in the second embodiment, the script URL is inserted into the HTML file by the content server 30.

Thus, in the second embodiment, the mobile terminal 10 does not includes the application information obtaining unit 121. In addition, the mobile terminal 10 includes an edition unit 123, instead of the insertion unit 122. The edition unit 123 edits reference information for the script URL that has been inserted by the insertion unit 34 of the content server 30. For example, when there is a plurality of first layer script URLs that are insertion candidates, at the stage in which the insertion unit 34 of the content server 30 performs insertion of the script URL, selection of the insertion target by the user is not allowed to be accepted. Therefore, the insertion unit 34 inserts all first layer script URLs and second layer script URLs that are included in application information corresponding to the context, into the HTML file so that all first layer script URLs and second layer script URLs are in the commented-out state. That is, the application information is inserted into the HTML file so as to be in the commented-out state. After a first layer script URL that is set as an insertion target is determined from among the plurality of first layer script URLs included in the HTML file so as to be commented out, the edition unit 123 deletes an unnecessary description that is included in the HTML file. The unnecessary description includes a first layer script URL that has not been set as an insertion target, a second layer script URL that is referenced from the first layer script URL, and the like.

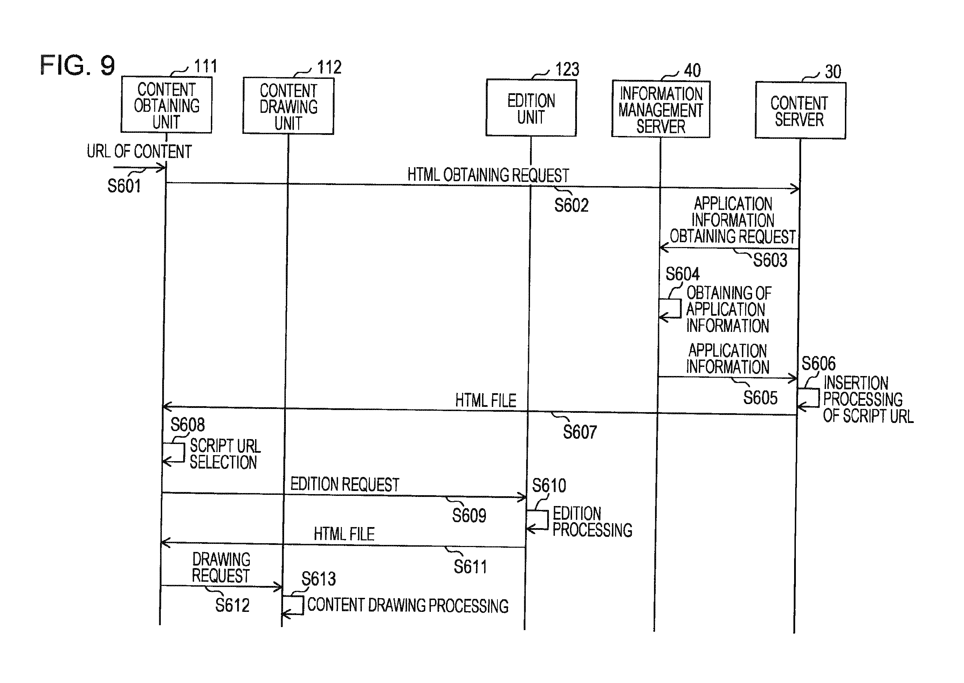

FIG. 9 is a sequence diagram illustrating an example of a processing procedure that is executed by the information processing system according to the second embodiment.

In Step S601, a URL (content URL) for a Web content, which has been input or selected by the user, is notified to the content obtaining unit 111. After that, the content obtaining unit 111 transmits an obtaining request of an HTML file, to the content URL (S602). In the obtaining request, a context ID is also included. The context ID includes, for example, information that is input by the user with the input of the URL of the Web content, information such as a date and time, location information, identification information of an access point of a wireless LAN at the time of input of the URL, information that has been read from a NFC tag, a barcode, or a two dimensional code at the time of input of the URL, or the like.

The obtaining request of the HTML file is received by the content management unit 31 of the content server 30 of the content URL. The content management unit 31 specifies a context ID and a content URL that are included in the obtaining request, and requests the application information obtaining unit 33 to obtain application information. The application information obtaining unit 33 transmits an obtaining request of application information that corresponds to the context ID and the content URL, to the information management server 40 (S603). The application information management unit 41 of the information management server 40 obtains the application information that corresponds to the context ID and the content URL that are included in the obtaining request, from the application information storage unit 42 (S604). The content management unit 31 sends back the obtained application information, to the application information obtaining unit 33 (S605).

The application information obtaining unit 33 obtains an HTML file of the content URL from the content storage unit 32, and requests the insertion unit 34 to insert a script URL that is included in the obtained application information, into the HTML file. The insertion unit 34 inserts a first layer script URL and a second layer script URL that are included in the application information, into the HTML file so that the first layer script URL and the second layer script URL are in the commented-out state (S606).

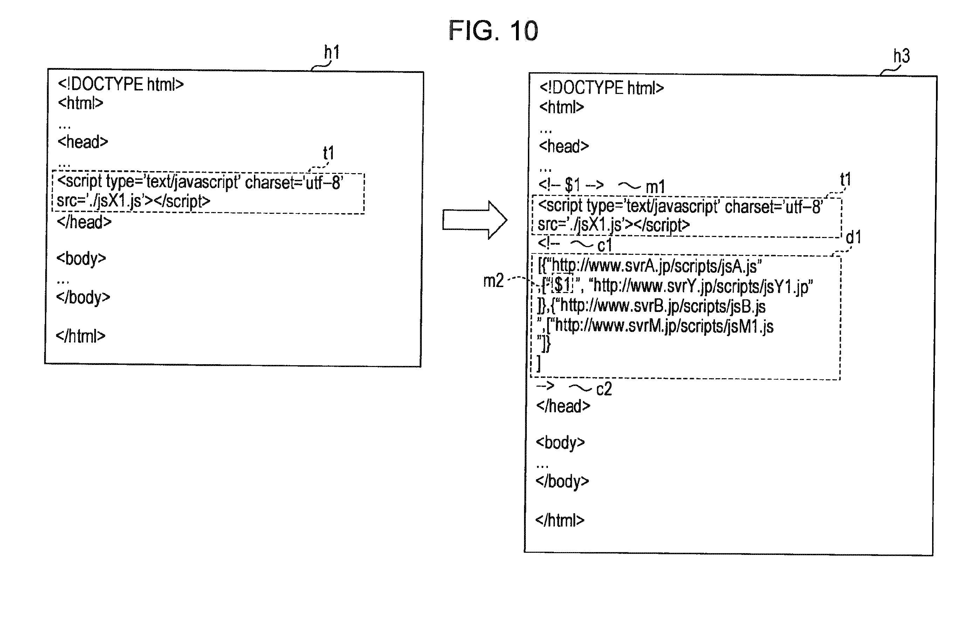

FIG. 10 is a diagram illustrating an insertion example of a script URL into an HTML file by the content server according to the second embodiment. In FIG. 10, the same symbol is assigned to a portion that is similar to FIG. 7, and the description is omitted herein. In addition, the example of FIG. 10 corresponds to a case in which a content URL is "http://app.example.com/app", and a context ID is "context 1".

In FIG. 10, an HTML file h3 is an HTML file into which a script URL has been inserted by the insertion unit 34. As is apparent from the comparison between the HTML file h3 and the HTML file h1, the insertion unit 34 inserts a duplication mark m1, a comment start symbol c1, a comment end symbol c2, and candidate information d1, into the HTML file h1 to generate the HTML file h3.

The candidate information d1 includes all first layer script URLs and second layer script URLs that are included in application information corresponding to a context ID, in a JavaScript (registered trademark) Object Notation (JSON) format. In the candidate information d1, in each of the first layer script URLs, a parent-child relationship or a layer relationship with the second layer script URL is maintained. The candidate information d1 may be described in a further format in which the parent-child relationship or the layer relationship is represented easily such as the XML format. The candidate information d1 is referred to as candidate information because the insertion is not established, and script URLs that are insertion candidates are listed in the candidate information d1.

The comment start symbol c1 and the comment end symbol c2 are symbols that are used to comment out the candidate information d1. However, in the embodiment, the comment start symbol c1 and the comment end symbol c2 are added so as to be used to identify the script URL that has been inserted by the insertion unit 34. Thus, as long as such an object is attained, a unique symbol other than the comment start symbol c1 and the comment end symbol c2 may be used.

The duplication mark m1 is a symbol that is added immediately before the <script> tag t1 when there is a script URL duplicated by a URL that is referenced in the <script> tag included in the HTML file from the beginning, in a script URL group included in the candidate information d1. In FIG. 10, the duplication mark m1 is assigned to the <script> tag t1. By referring to FIG. 5, in the second layer script URL that corresponds to the context 1, "http://www.svrX.jp/scripts/jsX1.js" is duplicated by the URL that is referenced in the <script> tag t1. Thus, the duplication mark m1 is assigned to the <script> tag t1.

On the other hand, in the candidate information d1, a portion that corresponds to the URL is replaced with a replacement mark m2. Here, values of the duplication mark m1 and the replacement mark m2 are matched at "$1". Therefore, it is indicated that the portion of the replacement mark m2 corresponds to the URL that is referenced in the <script> tag t1 corresponding to the duplication mark m1. When a <script> tag is further included in the HTML file h1, and the URL that is referenced in the <script> tag is duplicated by any script URL that is included in the candidate information d1, for example, a duplication mark a value of which is "$2" is assigned to the <script> tag, and the script URL is replaced with "$2".

The duplication mark and the replacement mark are used to avoid an increase in the candidate information d1. Thus, in the portion of the replacement mark m2, the URL before the replacement may be included as is. In this case, the duplication mark m1 may not be assigned.

When the insertion processing of the script URL ends, the insertion unit 34 outputs the HTML file h3 into which the script URL and the like have been inserted, to the content management unit 31. The content management unit 31 sends back the HTML file h3 to the content obtaining unit 111 (S607).

The content obtaining unit 111 causes the display device 106 to display a list screen in which a first layer script URL is used as an option and that is included in the candidate information d1 of the HTML file h3, and accepts selection of a single first layer script URL that is set as an insertion target into the HTML file, from the user (S608). In the list screen, an option that indicates that insertion of any first layer script URL is not performed may be included.

An explanatory note that is related to a function and the like of each of the first layer script URLs may be displayed instead of the first layer script URL or displayed with the first layer script URL. The explanatory note is included, for example, in the application information so as to be associated with the first layer script URL, and may be transcribed from the application information to the candidate information d1.

When the first layer script URLs do not have an exclusive or selective relationship, all first layer scripts may be set as insertion targets without execution of selection by the user. In addition, even when there is a merely single first layer script URL, the content obtaining unit 111 may cause the user to select whether or not insertion of the first layer script of the first layer script URL is performed.

The content obtaining unit 111 requests the edition unit 123 to edit the HTML file h3 (S610). The edition unit 123 edits the HTML file h3, and generates an HTML file that includes reference information for a first layer script URL that has been set as an insertion target, from among first layer script URLs that are included in the candidate information d1, and reference information for a second layer script URL of the first layer script URL.

Processing of Step S611 and subsequent steps may be similar to that of Step S512 and the subsequent steps in FIG. 4, so that the description is omitted herein.

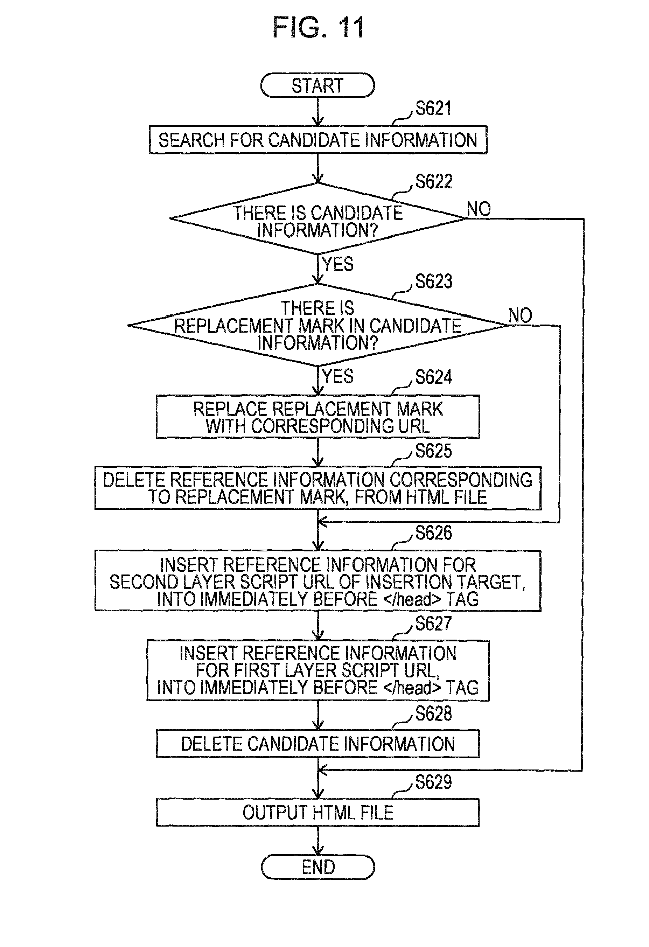

The detail of the processing of Step S610 is described below. FIG. 11 is a flowchart illustrating an example of a processing procedure of edition processing of the HTML file in the second embodiment.

In Step S621, the edition unit 123 scans an HTML file that is a processing target and searches for candidate information. For example, in a comment, a URL group that is described in the JSON format is searched for. When there is no candidate information (No in S622), the flow proceeds to Step S629. When there is candidate information (Yes in S622), the flow proceeds to Step S623. In the HTML file h3, the candidate information d1 is included. Thus, in this case, the flow proceeds to Step S623.

In Step S623, the edition unit 123 determines whether or not a replacement mark is included in the candidate information (S623). When a replacement mark is not included in the candidate information (No in S623), the flow proceeds to Step S626. When a replacement mark is included in the candidate information (Yes in S623), the flow proceeds to Step S624. In candidate information h3 of the HTML file h3, the replacement mark m2 is included. Thus, in this case, the flow proceeds to Step S624.

In Step S624, the edition unit 123 replaces the replacement mark in the candidate information, with a URL that is referenced in a <script> tag to which a duplication mark corresponding to the replacement mark has been assigned (S624). The duplication mark that corresponds to the replacement mark is a duplication mark having the same value as the replacement mark. In the HTML file h3, a portion of the replacement mark m2 in the candidate information h3 is replaced with "./jsX1.js" in the <script> tag t1 to which the duplication mark m1 has been assigned.

The edition unit 123 deletes the <script> tag to which the duplication mark that corresponds to the replaced replacement mark has been assigned (S625). This is why it is avoided that reference for an identical script is performed twice or more. In the HTML file h3, the <script> tag t1 is deleted. A comment that includes the duplication mark may be deleted.

The flow proceeds to Step S626. When there are two or more sets of duplication marks and replacement marks, the processing of Steps S624 and S625 are executed for each of the sets.

In Step S626, the edition unit 123 inserts reference information for the second layer script URL of the first layer script URL that is set as an insertion target, from among the second layer script URLs included in the candidate information, into immediately before a </head> tag of the HTML file. After that, the edition unit 123 inserts reference information for the first layer script URL that has been set as the insertion target, from among the first layer script URLs included in the candidate information, into immediately before the </head> tag of the HTML file (S627). After that, the edition unit 123 deletes the candidate information from the HTML file (S628). However, when the candidate information is commented out and disabled, the processing of Step S628 may not be executed.

The edition unit 123 outputs the HTML file into which the pieces of reference information for the script URLs have been inserted, to the content obtaining unit 111 (S629).

In the processing of FIG. 11, for example, the HTML file h2 illustrated in FIG. 7 is generated based on the HTML file h3.

The content server 30 does not delete the second layer script URL that is duplicated by the URL that has been referenced in the <script> tag included in the HTML file from the beginning, from the candidate information, and replaces the second layer script URL with the replacement mark because the order of <script> tags is important at the time of execution of the scripts, in the HTML file. For example, it is desirable that a <script> tag of a script that exists on a lower layer in a utilization relationship (call relationship) between the scripts is described previously. In order to maintain such an order relationship, the duplicated second layer script URL is replaced with the replacement mark.

As described above, in the second embodiment, a URL of a script corresponding to the state of the user is inserted into an HTML file in the content server 30. That is, application information is included in the HTML file. Thus, the mobile terminal 10 may obtain an effect that is similar to that of the first embodiment, even without being aware of the existence of the information management server 40.

When it is unnecessary to cause the user of the mobile terminal 10 to select a first layer script URL to be inserted, the HTML file h2 may be generated based on the HTML file h1 by the insertion unit 34 of the content server 30. That is, the insertion unit 34 may execute processing that is similar to the processing in the insertion unit 122 of the mobile terminal 10 in the first embodiment. In this case, the mobile terminal 10 may not include the edition unit 123.

In each of the above-described embodiments, there may be application information that does not include a second layer script URL.

A third embodiment is described below. In the third embodiment, points that are different from the first embodiment are described. Thus, points that are not particularly mentioned may be similar to those of the first embodiment.

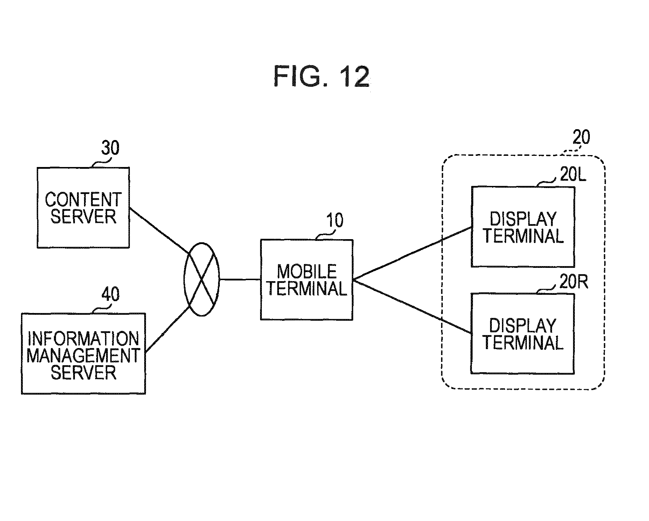

FIG. 12 is a diagram illustrating a system configuration example in the third embodiment. In FIG. 12, the mobile terminal 10 may be further connected to two display terminals 20 that are a display terminal 20L and a display terminal 20R, through a network. The communication between the mobile terminal 10 and the display terminal 20 may be performed using a mobile communication network, a wireless LAN, a short-range wireless communication, or the like.

The display terminal 20 is a display terminal that includes a large-size display such as a smart table, a digital signage, or a wall-mounted display. Each of the display terminals 20 includes a display function of a Web content. In the third embodiment, an example is described in which a single display having a display area the size of which is twice the size of the display of each of the display terminals 20 (hereinafter referred to as "integration display") is provided for the user, by arranging displays of the display terminals 20 at left and right sides. On the integration display, a Web content that is displayed in the mobile terminal 10 is displayed so as to extend over the display terminals 20.

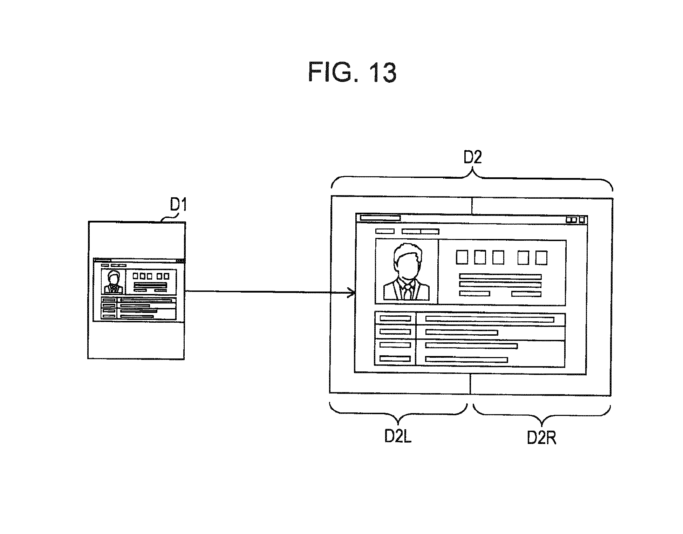

FIG. 13 is a diagram illustrating an example of a display image of a Web content in the integration display. In FIG. 13, the display D1 is a display of the mobile terminal 10. A display D2L is a display of the display terminal 20L. A display D2R is a display of the display terminal 20R. As illustrated in FIG. 13, on an integration display D2 that is constituted by the display D2L and the display D2R, an image displayed in the display D1 is displayed so as to extend over the two displays.

Here, displays of three or more display terminals 20 may be integrated. In this case, the display terminals 20 may arrayed in the vertical direction in addition to the horizontal direction. For example, when four display terminals 20 are combined, a configuration may be employed in which the integration displays D2 illustrated in FIG. 13 are arrayed in the vertical direction.

Alternatively, the entire image displayed on the mobile terminal 10 may be displayed on each of the display terminals 20. That is, on each of the display terminals 20, an identical image may be displayed. In this case, a relationship between the mobile terminal 10 and the display terminal 20 corresponds to "1 to 1".

In the embodiment, the display terminal 20 includes a unit that is used to accept an operation for the Web content, from the user. For example, the display terminal 20 may include a touch-panel. Thus, even in the display terminal 20, the operation for the Web content is performed. The operation for the Web content is an operation for the image that is displayed based on the Web content.

Processing that causes the Web content being displayed in the mobile terminal 10 to be displayed on the display terminal 20, that is, processing that causes the display state in the mobile terminal 10 and the display state in the display terminal 20 to be synchronized with each other is achieved by processing that a script that is referenced from the HTML file by the method that is described in the first or second embodiment causes the mobile terminal 10 to execute. In the third embodiment, an example of processing that a script of a script URL that has been inserted into an HTML file causes the mobile terminal 10 to execute is described in detail.

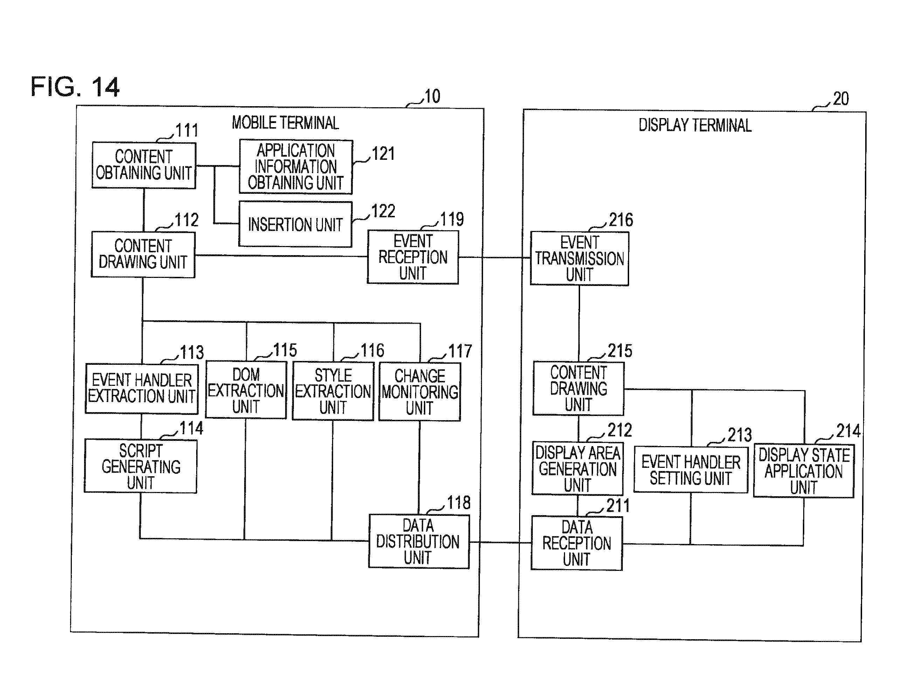

FIG. 14 is a diagram illustrating function configuration examples of the mobile terminal and the display terminal according to the third embodiment. In FIG. 14, the same symbol is assigned to a portion that is similar to FIG. 3, and the description is omitted herein.

In FIG. 14, the mobile terminal 10 further includes an event handler extraction unit 113, a script generation unit 114, a DOM extraction unit 115, a style extraction unit 116, a change monitoring unit 117, a data distribution unit 118, and an event reception unit 119. Each of these units is achieved by processing that a script of reference information that is inserted into an HTML file by the method described in the first or second embodiment (hereinafter referred to as "synchronous data distribution script") causes the CPU 104 to execute. The synchronous data distribution script may be a first layer script, or may be aggregate of a first layer script and a second layer script.

As described in the first embodiment, the content drawing unit 112 executes drawing processing of a Web content. In the drawing processing, analysis of an HTML file and a CSS file, execution of a script that is defined by a script file, and the like, are performed. Due to the analysis of the HTML file, a DOM tree is generated, and stored in the memory device 103. The DOM tree is an object group that stores the current state (structure) of the Web content, and also functions as an Application Program Interface (API) for each element of the HTML.

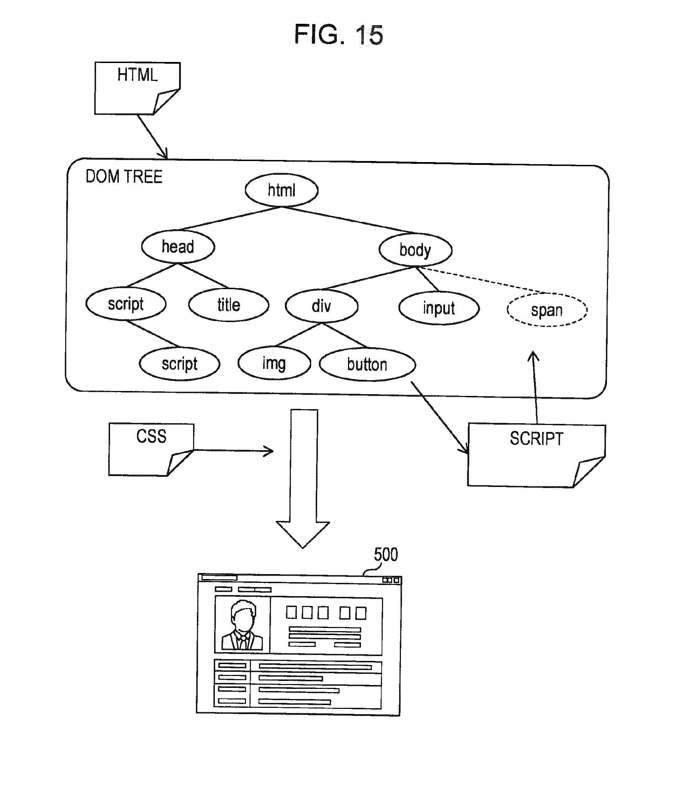

FIG. 15 is a diagram illustrating a relationship between HTML, DOM, CSS, and a script. In FIG. 15, it is indicated that the DOM tree is initialized by the HTML. That is, an HTML file that is downloaded from the content server 30 stores the initial state of an image that is displayed based on the Web content. When the display state of the image is changed depending on an operation for the image by the user, the display state after the change is held in the DOM tree. That is, the change in the display state of the Web content is achieved by the change in the DOM element tree. Each of the elements that constitute the DOM tree is referred to as a DOM element.

The CSS is definition that is related to arrangement, modification, and the like of the DOM element. Due to application of the CSS to the DOM tree, an image 500 is displayed. The script may detect an operation for the DOM element, and rewrite the DOM tree.

The event handler extraction unit 113 extracts an event handler from the script that constitutes the Web content. The script generation unit 114 generates a script that has been defined to notify the mobile terminal 10 of an occurrence of an event that is set as a monitor target by the extracted event handler, from the display terminal 20 that is a display destination of the Web content (hereinafter referred to as "event notification script"). The event notification script is distributed to each of the display terminals 20, and causes each of the display terminals 20 to function as an event transmission unit 216.

The DOM extraction unit 115 generates data that is obtained by stringing the DOM tree that has been loaded onto the memory device 103 (hereinafter referred to as "DOM data"). The style extraction unit 116 generates data that is obtained by stringing the style definition that has been loaded to the memory device 103 due to analysis of a CSS file (hereinafter referred to as "style definition data"). The change monitoring unit 117 monitors a change in the DOM elements that constitute the DOM tree.

The data distribution unit 118 distributes the event notification script that is generated by the script generation unit 114, the DOM data that is generated by the DOM extraction unit 115, the style definition data that is generated by the style extraction unit 116, and the like, to each of the display terminals 20. In addition, when a change in the DOM tree is detected by the change monitoring unit 117, data that indicates a difference between the DOM tree before the change and the DOM tree after the change (hereinafter referred to as "difference data") is also distributed to each of the display terminals 20 by the data distribution unit 118. However, instead of the difference data, DOM data that is obtained by stringing the entire DOM tree after the change may be distributed to each of the display terminals 20.

The event reception unit 119 receives notification of an occurrence of an event, which is transmitted from each of the display terminals 20, based on the event notification script. The DOM tree in the mobile terminal 10 is changed based on the notification.

The display terminal 20 includes a data reception unit 211, a display area generation unit 212, an event handler setting unit 213, a display state application unit 214, a content drawing unit 215, and the event transmission unit 216. Each of these units is achieved by processing that a program that is installed onto the display terminal 20 or a program that is distributed to the display terminal 20 causes the CPU of the display terminal 20 to execute.

The data reception unit 211 receives data that is distributed from the mobile terminal 10. For example, DOM data, style definition data, and script data are received from the mobile terminal 10. In addition, when the DOM tree is changed in the mobile terminal 10, the difference data is received by the data reception unit 211.

The display area generation unit 212 generates a display area of the image based on the Web content. The event handler setting unit 213 sets an event notification script that is received by the data reception unit 211, for the display area. The display state application unit 214 applies the DOM data, the style definition data that are received by the data reception unit 211, and the difference data, to the display area. The application of the DOM data and the style definition data causes the image to be displayed on the display area. In addition, the application of the difference data causes the display state of the image to be changed.

The content drawing unit 215 achieves a function that is basically similar to that of the content drawing unit 112 of the mobile terminal 10. The event transmission unit 216 transmits notification of an event that indicates an operation for the image that is displayed in the display area, to the mobile terminal 10, in response to the operation.

The data reception unit 211, the display area generation unit 212, the event handler setting unit 213, and the display state application unit 214 are achieved by processing that a script causes the CPU of the display terminal 20 to execute. Hereinafter, such a script is referred to as "synchronous data reception script". The synchronous data reception script is installed, for example, to the display terminal 20, in advance.

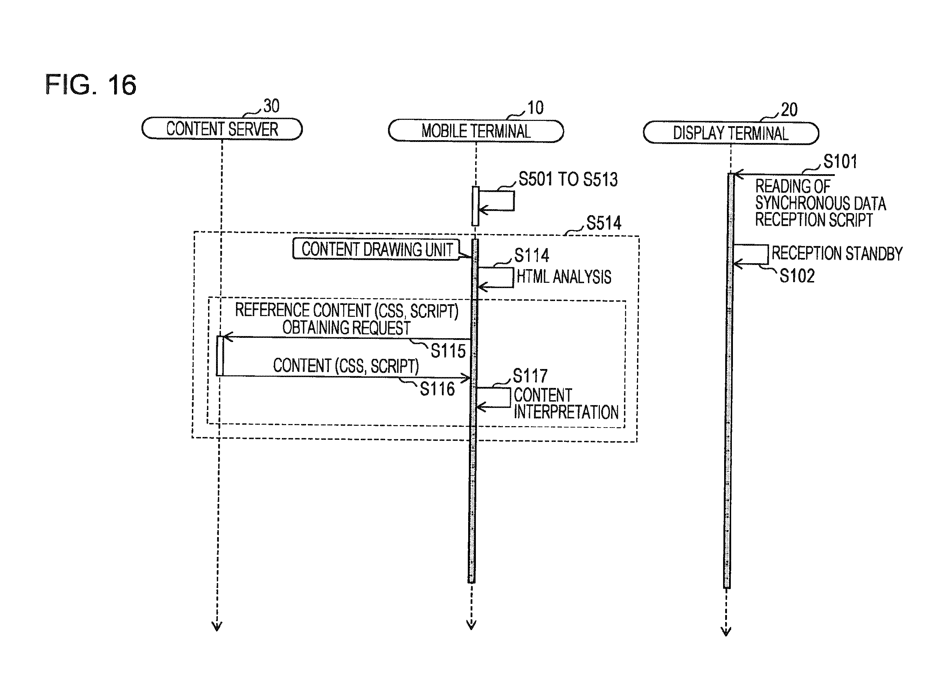

Processing procedures that are executed by the mobile terminal 10 and the display terminal 20 are described below. FIG. 16 is a sequence diagram illustrating an example of a processing procedure that is executed for an HTML file into which a script URL has been inserted. In FIG. 16, the same step number is assigned to a step that is similar to that of FIG. 4, and the description is omitted herein.

The display terminal 20 reads a synchronous data reception script, for example, in response to start-up or a certain operation by the user (S101). After that, based on the synchronous data reception script, the data reception unit 211 waits for reception of data from the mobile terminal 10 (S102).

On the other hand, the mobile terminal 10 executes the processing of Steps S501 to S514. In Steps S501 to S514, a context ID may be, for example, information that is read from a NFC tag, a barcode, a two-dimensional code, or the like that is attached to the display terminal 20. Alternatively, the context ID may be information that is received from the display terminal 20 by communication between the mobile terminal 10 and each of the display terminals 20 in the processing before Step S501. In the third embodiment, a script of a script URL that is associated with the context ID that has been identified as described above, in the application information, is a synchronous data distribution script. That is, the synchronous data distribution script is an example of a script that is suitable for a state in which the user of the mobile terminal 10 is close to the display terminal 20.

In Step S514, processing of Steps S114 to S117 is executed. In Step S114, the content drawing unit 112 analyzes (parses) a definition content of an HTML file, and generates a DOM tree that indicates a configuration or the like of a display element that is defined in the HTML file (display configuration). The DOM tree is stored in the memory device 103. Depending on the progress of the analysis of the HTML file, the content drawing unit 112 transmits an obtaining request of a content that is reference from the HTML file (hereinafter referred to as "reference content"), to the content server 30 (S115). The reference content is, for example, a CSS file, a script file, or the like. After that, the content server 30 sends back the requested content, to the content drawing unit 112 (S116). After that, the content drawing unit 112 interprets the sent CSS file or script file (S117). For example, based on the CSS file, layout (arrangement position) of the display element that is indicated by the DOM tree is identified. In the reference content, a still image content, a movie content, and the like may be included.

The processing of Steps S115 to S117 is repeated for each of the reference contents. When the processing of S115 to S117 is executed for all of the reference contents, an image based on the Web content that is constituted by the HTML file and the reference contents is displayed on the display device 106 of the mobile terminal 10. Hereinafter, information that is read to the memory device 103 to display the Web content is referred to as "content display information". In the content display information, a DOM tree, style definition, script definition, and the like are included. The style definition is definition that is related to layout of the display element that is indicated by the DOM tree, and is read from the CSS file. The script definition is definition that is related to a script, which is read from a script file.

In the HTML file, reference information for a synchronous data distribution script is included, by execution of the processing of Steps S501 to S513. Thus, in the processing of Steps S115 to S116, the synchronous data distribution script is also obtained as one of reference contents, and read. As a result, the mobile terminal 10 may function as the event handler extraction unit 113, the script generation unit 114, the DOM extraction unit 115, the style extraction unit 116, the change monitoring unit 117, the data distribution unit 118, and the event reception unit 119.

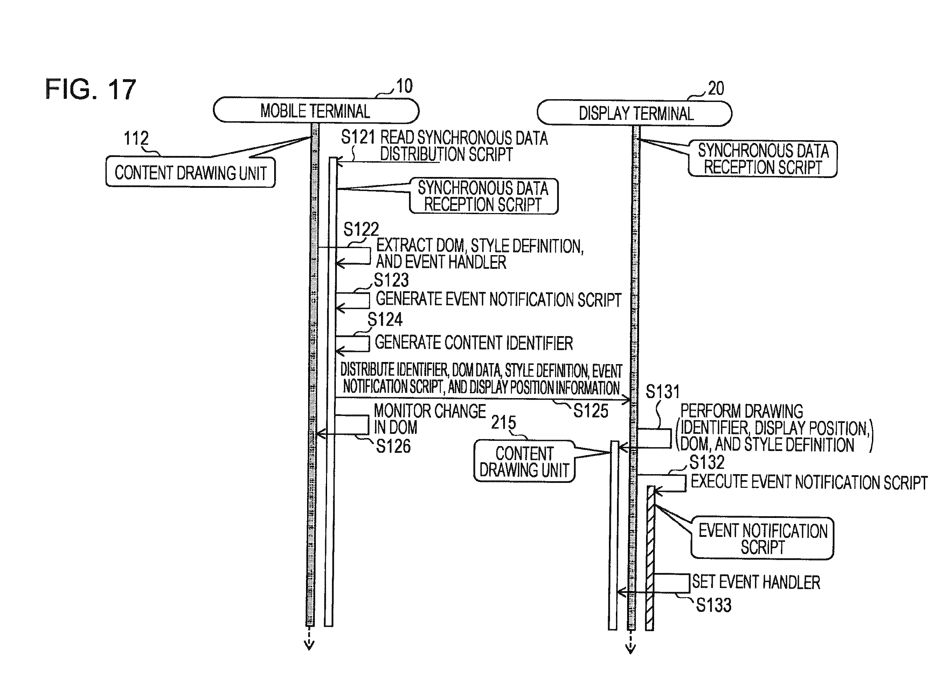

FIG. 17 is a sequence diagram illustrating an example of a processing procedure that is executed depending on reading of a synchronous data distribution script in the mobile terminal.

In Step S121, the CPU 104 reads a synchronous data distribution script to the memory device 103. The synchronous data distribution script is stored, for example, in the auxiliary storage device 102 in advance. In addition, the reading of the synchronous data distribution script may be executed, for example, in response to an operation for the mobile terminal 10. In FIG. 17, the white axis that is associated with the mobile terminal 10 and extends from Step S121 or subsequent steps corresponds to the event handler extraction unit 113, the script generation unit 114, the DOM extraction unit 115, the style extraction unit 116, the change monitoring unit 117, the data distribution unit 118, and the event reception unit 119 that are achieved so as to be executed by the CPU 104 through the synchronous data distribution script.

In Step S122, DOM data, style definition, and an event handler are extracted from content display information that is managed by the content drawing unit 112. The DOM data is obtained by stringing the DOM tree in the memory device 103, and extracted by the DOM extraction unit 115. The style definition data is obtained by stringing style definition in the memory device 103, and extracted by the style extraction unit 116. The event handler is extracted from script definition that constitutes the content display information by the event handler extraction unit 113. The event handler is obtained by defining processing that is to be executed in response to an occurrence of an event by a script.

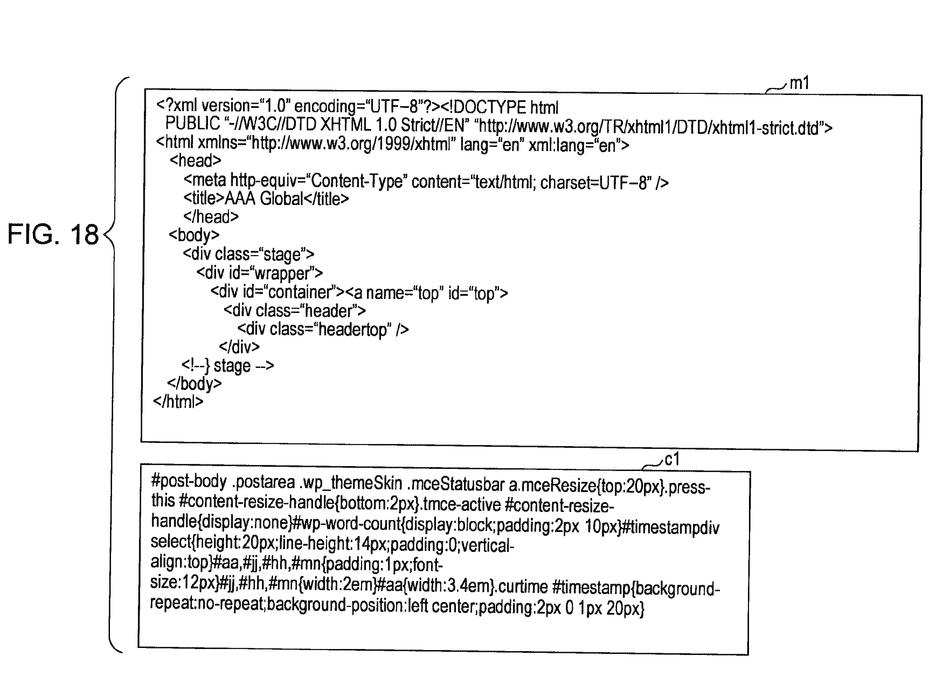

FIG. 18 is a diagram illustrating examples of DOM data and style definition data. In FIG. 18, DOM data m1 and style definition data c1 are illustrated. As can be seen from FIG. 18, the DOM data m1 has a format of HTML. In addition, the style definition data c1 has a format of CSS. Thus, the DOM data m1 and the style definition data c1 respectively have data formats that are allowed to be interpreted by a general Web browser.

The script generation unit 114 generates an event notification script based on the extracted event handler (S123). The event notification script is a script that has been defined to notify the mobile terminal 10 of an occurrence of an event that is a monitor target when the event is detected, and is used in the display terminal 20. That is, when an event occurs that corresponds to an event handler that has been defined for a Web content in the display terminal 20, not the processing that has been defined for the event handler from the beginning, but processing that is used to notify the mobile terminal 10 of the occurrence of the event is executed.

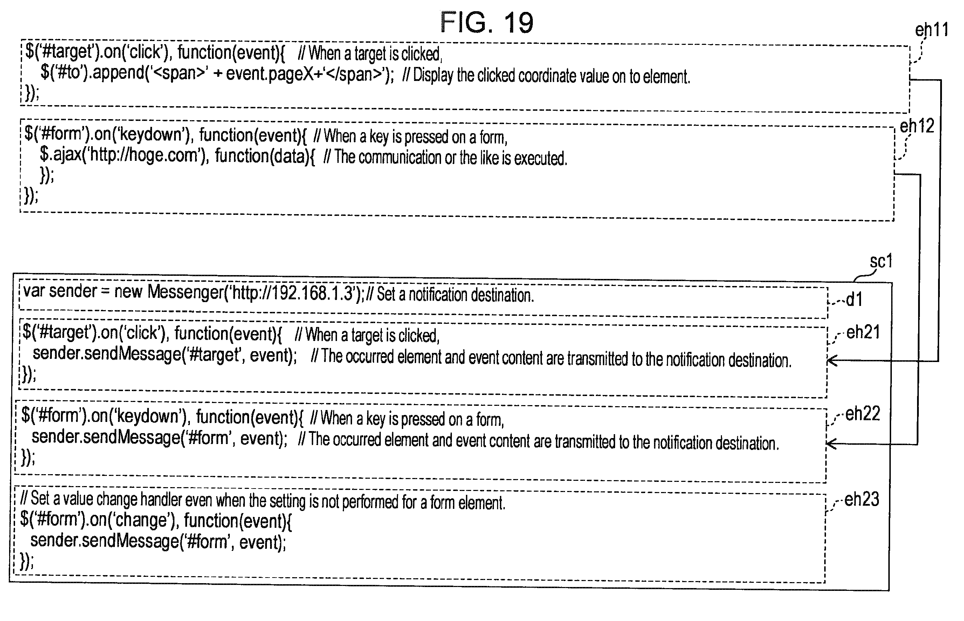

FIG. 19 is a diagram illustrating a generation example of an event notification script based on an event handler. In FIG. 19, extracted event handlers eh11 and eh12, and an event notification script sc1 that is generated based on these event handlers are illustrated. Definition contents of the event handlers eh11 and eh12 are for convenience.

The definition content of the event handler eh11 indicates "when a 'target' is clicked, the clicked coordinate value is displayed on 'to' element". The definition content of the event handler eh12 indicates "when a key is pressed on a 'form', the communication or the like is performed".

In the event notification script sc1, an event handler eh21 is included based on the event handler eh11, and an event handler eh22 is included based on the event handler eh12. The definition content of the event handler eh21 indicates "when a 'target' is clicked, an element in which an event has occurred and a content of the event are transmitted to a notification destination". In addition, the definition content of the event handler eh22 indicates "when a key is pressed on a 'form', an element in which an event has occurred and a content of the event are transmitted to a notification destination". As described above, in the event notification script sc1, an event handler that notifies the notification destination of an occurrence of an event that is set as a monitor target by the event handler is included, for each event handler that has been extracted from script definition.

In the event notification script sc1, definition d1 that is related to the notification destination is also included. In the definition d1, a URL of a notification destination (sender) is set. The URL corresponds to the mobile terminal 10 in the embodiment.

In the event notification script sc1, an event handler eh23 for an element to which an event handler is not set, from among form elements, is also included. The definition content of the event handler eh23 indicates "an event that is related to the element is transmitted to the notification destination". The event handler eh23 is used, for example, to reflect an input for each character for a text box on the form of the Web content that is displayed in the display terminal 20, on the display state of the mobile terminal 10.

The data distribution unit 118 generates a content identifier (S124). The content identifier is identification information that is used to identify a relationship between each Web content and the corresponding mobile terminal 10 by each of the display terminals 20 when each of the display terminals 20 displays respective Web contents from the plurality of mobile terminals 10 in parallel. That is, on the display terminal 20, the Web contents that are displayed on the plurality of mobile terminals 10 may be displayed at the same timing. In this case, in the display terminal 20, one of the Web contents may be displayed on the front, and the other Web contents may be hidden behind.

The data distribution unit 118 distributes the content identifier, the DOM data m1, the style definition data c1, the event notification script sc1, display position information, and the like, to each of the display terminals 20 (S125). The identical content identifier, DOM data m1, style definition data c1, and event notification script sc1 are transmitted to each of the display terminals 20. The display position information is information that indicates the display position and the size of a display area on which an image based on a Web content is displayed in each of the display terminals 20. The display position information includes, for example, the upper left vertex, the width, and the height of the display area. The display position of the Web content is different depending on each of the display terminals 20. That is, due to the difference between the display positions of the display terminals 20, the integration display D2 may be achieved. Thus, the display position information is different depending on each of the display terminals 20. The display position information is defined, for example, in the synchronous data distribution script. In addition, address information of each of the display terminals 20 may be defined in the synchronous data distribution script.

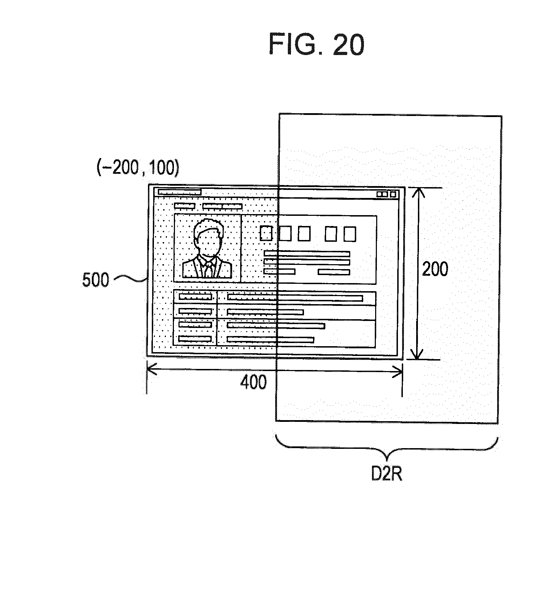

FIG. 20 is a diagram illustrating display position information. In FIG. 20, the display D2R in FIG. 13 is illustrated. That is, in FIG. 20, an example of display position information that is transmitted to the display terminal 20R. In the display position information, the coordinates of the upper left vertex is (-200,100), and the width is 400, and the height is 200. Here, the coordinates of the upper left vertex is set outside the range of the coordinate system of the display D2R, so that the left half of the image 500 is not displayed on the display D2R. As a result, on the display D2R, the right half of the image 500 is displayed. On the same principle, the display position of the display D2L is determined so that the left half of the image 500 is displayed. Thus, due to the adjustment of the display position information, the entire image 500 may be displayed so as to extend over the display terminals 20. Alternatively, the display position may be determined so that parts of images that are respectively displayed on the display terminals 20 are overlapped with each other.

The DOM data m1 that is transmitted in Step S125 indicates the current display state of the Web content in the mobile terminal 10. Thus, when the display state is changed, the content of the DOM data m1 is different from a definition content of the HTML file that has been downloaded from the beginning in the Web content. That is, to each of the display terminals 20, not the HTML file, but the DOM data m1 is transmitted in order to reproduce the current display state. On the other hand, style definition data includes fixed or static information. Thus, the style definition data that has been downloaded from the beginning may be transmitted to the display terminal 20 as is.

After that, the change monitoring unit 117 monitors a change in a DOM tree in the memory device 103. The change in the DOM tree occurs due to a change in the display state of a Web content. That is, when the DOM tree is changed, the display state of the Web content is also changed. Thus, it is also said that the change monitoring unit 117 monitors a change in the display state of the Web content.

On the other hand, the data reception unit 211 of each of the display terminals 20 receives the content identifier, the DOM data m1, the style definition data c1, the event notification script sc1, the display position information, and the like that have been transmitted by the data distribution unit 118. After that, drawing of the Web content is requested to the content drawing unit 215. The request includes the content identifier, the display position information, the DOM data m1, and the style definition data c1 (S131). The content drawing unit 215 executes analysis processing that is similar to that of the content drawing unit 112 for a display area having the position and the size that are indicated by the display position information, based on the DOM data m1 and the style definition c1. As a result, an image based on the Web content is displayed on the display of the display terminal 20. That is, the image 500 that is displayed on the mobile terminal 10 is displayed on the display terminal 20. However, a portion of the image 500 that is displayed on each of the display terminals 20 may be different depending on the display position information. The content drawing unit 215 associates the content identifier with a DOM tree that is generated in the memory device based on the DOM data m1.

The event handler setting unit 213 executes the event notification script sc1 (S132). As a result, each event handler that is included in the event notification script sc1 is set to the content drawing unit 215 (S133).

After that, each of the mobile terminal 10 and the display terminal 20 waits for an occurrence of an event. For example, each of the terminals waits for an operation by the user.

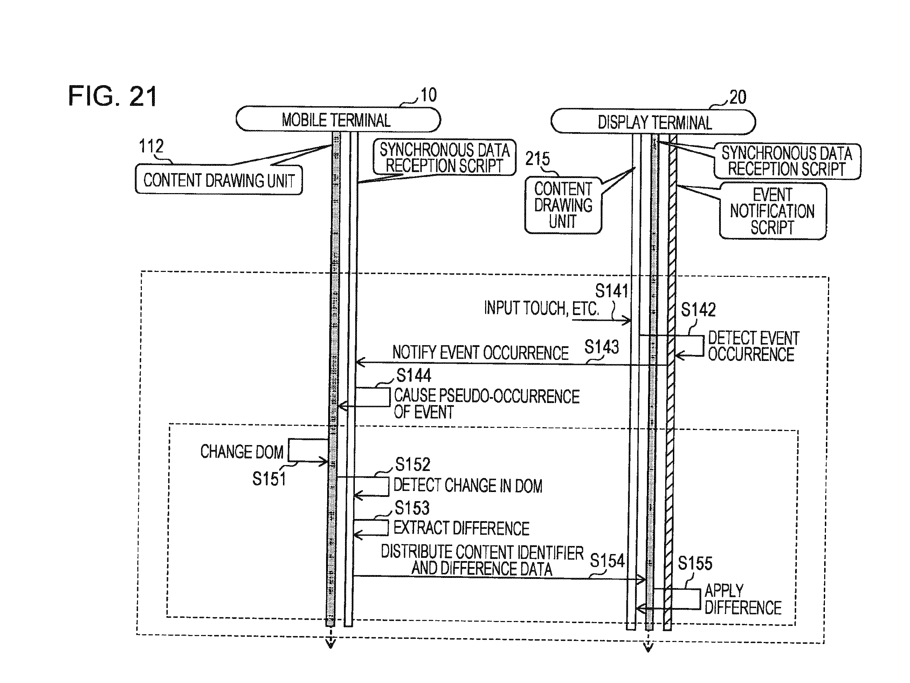

A processing procedure that is executed depending on an operation by the user for the image that has been displayed based on the Web content is described below. FIG. 21 is a sequence diagram illustrating an example of the processing procedure that is executed depending on an operation by a user for the image that is displayed based on the Web content.

For example, when the display (touch-screen) of any one of the display terminals 20 is touched, and an operation for the displayed image is performed (S141), the content drawing unit 215 causes an event that corresponds to the operation to occur (S142). The event is detected (captured) by an event handler that corresponds to the event. Due to the detection of the event, the event transmission unit 216 transmits event occurrence notification that includes information that indicates a DOM element that has been set as a target of the event and the type of the event, to the notification destination (mobile terminal 10), based on definition of the event handler (S143). The event reception unit 119 of the mobile terminal 10 receives the event occurrence notification. When the change monitoring unit 117 detects reception of the event occurrence notification, the change monitoring unit 117 causes pseudo-occurrence of the event that has been notified by the event occurrence notification (S144). The pseudo-occurred event is notified to the content drawing unit 112.

The content drawing unit 112 changes the DOM tree, based on definition of an event handler that corresponds to the pseudo-occurred event, from among event handlers that are included in the script definition (S151). The change in the DOM tree is detected by the change monitoring unit 117 (S152). The change monitoring unit 117 extracts difference data that includes information that indicates a difference of the DOM tree before the change and the DOM tree after the change (S153).

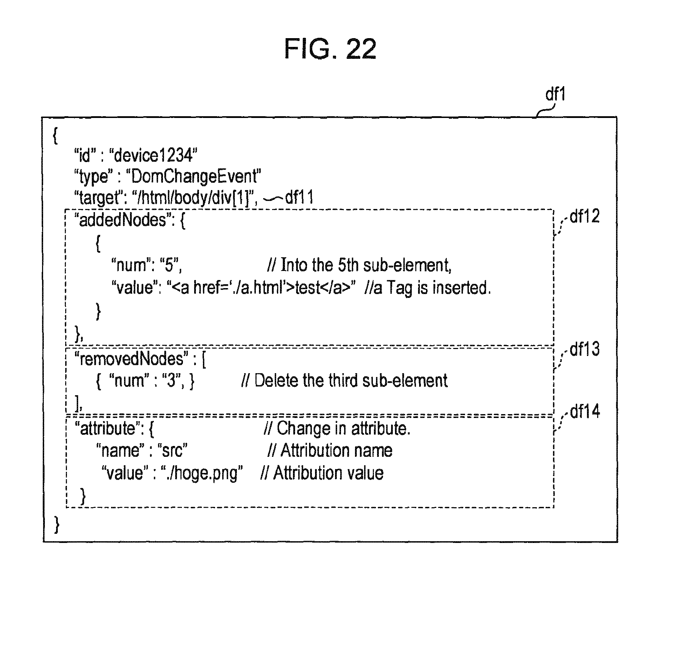

FIG. 22 is a diagram illustrating an example of difference data. In difference data df1 illustrated in FIG. 22, a description df11 indicates an element that is a change target (hereinafter referred to as "target element"). A description df12 indicates that insertion of "a" tag as the 5-th sub-element of the target element has been performed. A description df13 indicates that deletion of the 3-th sub-element of the target element has been performed. A description df14 indicates that a value of "src" attribute of the target element has been changed to "./hoge.png".

The data distribution unit 118 distributes the content identifier for the Web content in which the DOM tree has been changed, and the difference data df1, to each of the display terminals 20 (S154). The data reception unit 211 of each of the display terminals 20 receives the content identifier and the difference data df1.

The display state application unit 214 applies the content identifier and the difference data df1 to the content drawing unit 215 (S155). The content drawing unit 215 changes the DOM tree that is associated with the content identifier, based on the difference data df1. As a result, the display state in each of the display terminals 20 is also changed.

The processing of Steps S141 to S155 is executed each time an operation for the image is performed, on the display terminal 20 side. Thus, the display state in the mobile terminal 10 and the display state in the display terminal 20 are change depending on an operation for the image on the display terminal 20 side. In addition, each time an operation for the image is performed in the mobile terminal 10, the processing of Steps S151 to S155 is executed. That is, in this case, in the mobile terminal 10, not a pseudo-event, but an actual event occurs, and the processing of Step S151 and the subsequent steps is executed in accordance with the actual event. Thus, even when an operation for the image is performed on the mobile terminal 10 side, the display state in the mobile terminal 10 and the display state in the display terminal 20 are changed. As described above, in the embodiment, even when an operation for the image is executed in any one of the mobile terminal 10 and the display terminals 20, the display states between all of the terminals may be synchronized with each other.

The pieces of processing that are respectively executed by the mobile terminal 10 and the display terminal 20 are described below in further detail. First, the processing that is executed by the mobile terminal 10 is described.

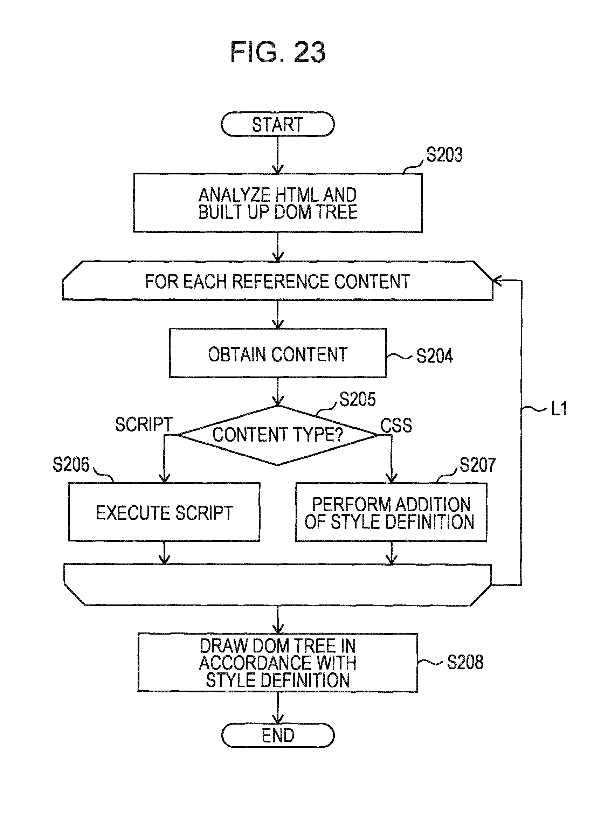

FIG. 23 is a flowchart illustrating an example of a processing procedure of analysis processing of HTML by the mobile terminal. FIG. 23 illustrates the processing that is executed by the mobile terminal 10 in Step S114 of FIG. 16 and the subsequent steps in detail.

In Step S203, the content drawing unit 112 analyzes (parses) a definition content of an HTML file and builds up a DOM tree. The DOM tree is stored in the memory device 103.

After that, loop processing L1 is executed for each reference content that is referenced from the HTML file. In Step S204 of the loop processing L1, the content drawing unit 112 obtains a reference content. After that, the content obtaining unit 111 causes processing to be branched depending on the type of the obtained reference content (S205). When the obtained reference content is a script file, the content drawing unit 112 executes a script that is defined in the script file (S206). On the other hand, when the obtained reference content is a CSS file, the content drawing unit 112 adds style definition that is included in the CSS file, to style definition that has been already obtained (S207).

When the loop processing L1 ends, the content drawing unit 112 draws display elements that constitute the DOM tree in accordance with the style definition (S208). As a result, the image based on the Web content is displayed on the display device 106.

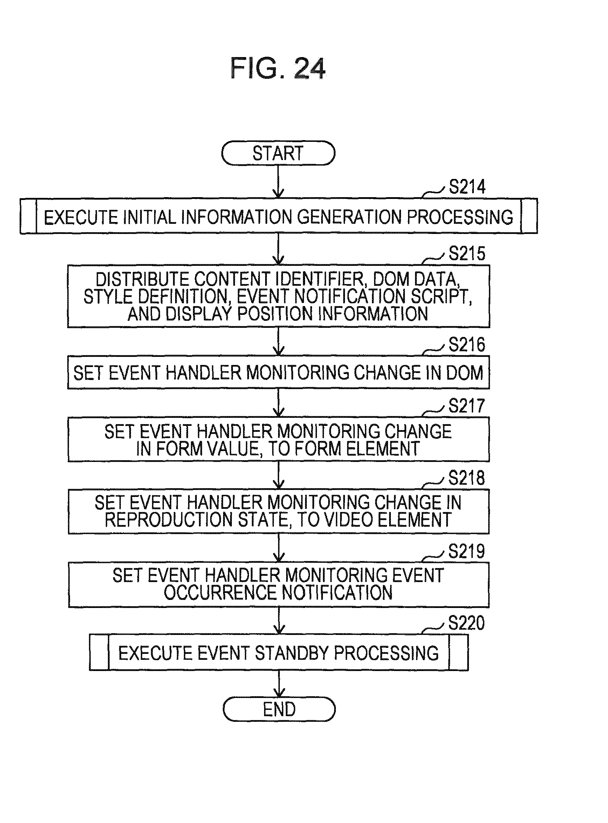

The processing of FIG. 17, which is executed by the mobile terminal 10, is described below in detail. FIG. 24 is a flowchart illustrating an example of a processing procedure that is executed by the mobile terminal depending on reading of a synchronous data distribution script.

In Step S214, a synchronous data distribution script causes the CPU 104 to execute initial information generation processing. In the initial information generation processing, DOM data m1, style definition data c1, an event notification script sc1, a content identifier, and the like are generated.

The data distribution unit 118 distributes the content identifier, the DOM data m1, the style definition data c1, the event notification script sc1, display position information, and the like, to each of the display terminals 20 (S215).

After that, the change monitoring unit 117 sets an event handler that is used to monitor a change in the DOM tree, to all DOMs that constitute the DOM tree (S216). For example, an event handler may be set that is defined by Web standard and monitors MutationEvent that occurs at the time of change in the DOM. For example, when addition, deletion, or the like of a DOM element occurs, a DOMSubtreeModified event of MutationEvent occurs. In addition, when an attribute of the DOM element is changed, a DOMAttrModified event occurs. MutationEvent is described, for example, in "https://developer.mozilla.org/en-US/docs/Web/Guide/Events/Mutation_events" in detail. By checking the DOM tree regularly, and determining the presence or absence of a difference, a change in the DOM tree may be detected.

After that, the change monitoring unit 117 sets an event handler that is used to monitor a change in a form value, to a form element from among DOM elements (S217). After that, the change monitoring unit 117 sets an event handler that monitors a change in the reproduction state of a movie content, to a video element from among the DOM elements (S217). The change in the reproduction state corresponds to start of reproduction, pause of the reproduction, stop of the reproduction, seek, and the like. The video element is an element of a video tag that has been added in HTML5. In the HTML5, due to usage of the video tag, reproduction and the like of the movie content may be performed without installing a plug-in or the like.

After that, the change monitoring unit 117 sets an event handler that is used to monitor reception of event occurrence notification from each of the display terminals 20 (S219). After that, the change monitoring unit 117 executes event standby processing (S220). That is, the change monitoring unit 117 waits for an occurrence of an event that is related to the event handler that has been set in the processing of Steps S216 to S219.

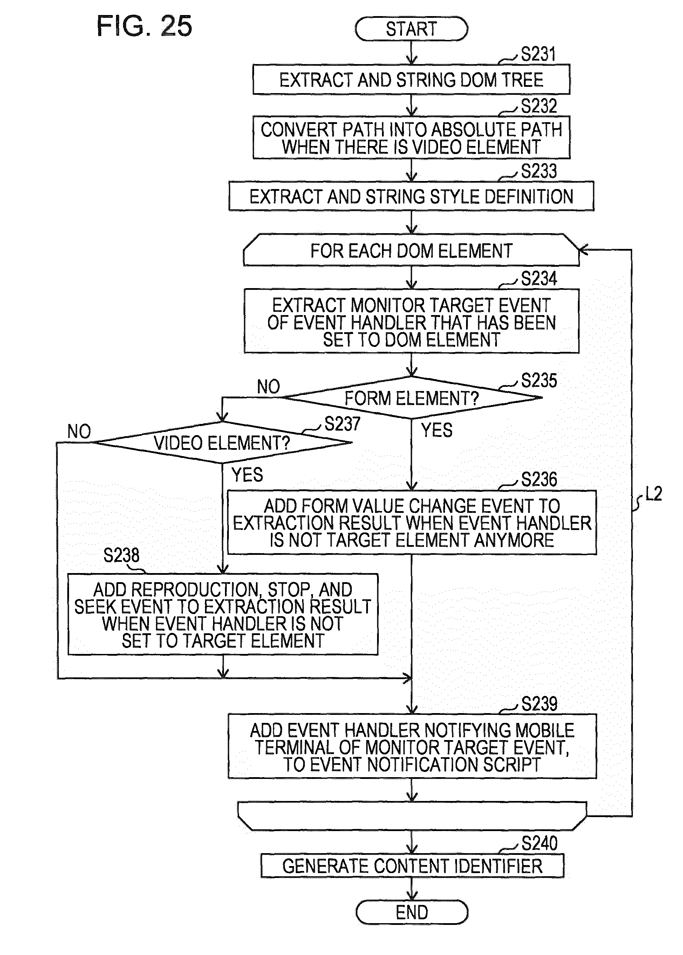

The processing of Step S214 is described below in detail. FIG. 25 is a flowchart illustrating an example of a processing procedure of the initial information generation processing.

In Step S231, the DOM extraction unit 115 extracts a DOM tree from content display information through the content drawing unit 112, and generates DOM data m1 by stringing the DOM tree. After that, when there is a video element in DOM elements that constitute the DOM tree, the DOM extraction unit 115 converts a path name of the video element into an absolute path name in the DOM data (S232). The path name of the video element is a path name that is set as a value of src attribute of the video element, or a path name that is set as a value of src attribute of a source tag in the video element. Here, the path name is converted into the absolute path name in order to allow an access to a movie content of the path name in the display terminal 20. That is, the movie content is downloaded in each of the display terminals 20.

The style extraction unit 116 extracts style definition from the content display information, through the content drawing unit 112, and generates style definition data c1 by stringing the style definition (S233).

After that, loop processing L2 is executed for each of the DOM elements that constitute the DOM tree. Hereinafter, a DOM element that is set as a processing target in the loop processing L2 is referred to as "target element".

In Step S234, the event handler extraction unit 113 extracts a monitor target event of an event handler that has been set to a target element (S234). After that, the event handler extraction unit 113 causes processing to be branched depending on whether or not the target element is a form element (S235). When the target element is a form element (Yes in S235), the flow proceeds to Step S236. When the target element is not a form element (No in S235), the flow proceeds to Step S237.

In Step S236, when an event handler in which a change in a form value of the target element is set as a monitor target event is not set to the target element, the event handler extraction unit 113 adds the monitor target event to the extraction result in Step S234. After execution of the processing of Step S236, the flow proceeds to Step S239.

In Step S237, the event handler extraction unit 113 causes processing to be branched depending on whether or not the target element is a video element. When the target element is a video element (Yes in S237), the flow proceeds to Step S238. When the target element is not a video element (No in S237), the flow proceeds to Step S239.

In Step S238, when an event handler in which an event that indicates a change in the reproduction state of a movie in the target element (start event of reproduction, pause event of the reproduction, stop event of the reproduction, seek event, or the like) is set as a monitor target is not set to the target element, the event handler extraction unit 113 adds the monitor target event to the extraction result in Step S234. After execution of the processing of Step S238, the flow proceeds to Step S239.

In Step S239, the script generation unit 114 adds an event handler that is used to notify the mobile terminal 10 of the monitor target event that is included in the extraction result, to the event notification script sc1 (S239).

When the loop processing L2 ends, the data distribution unit 118 generates a content identifier (S240). The content identifier may be generated, for example, using a random number. Alternatively, the content identifier may be generated using identification information for each of the mobile terminals 10 (for example, address information or the like). In addition, when the number of Web contents that are allowed to be displayed in the mobile terminal 10 is one, identification information for each of the mobile terminals 10 may be used as the content identifier as is.

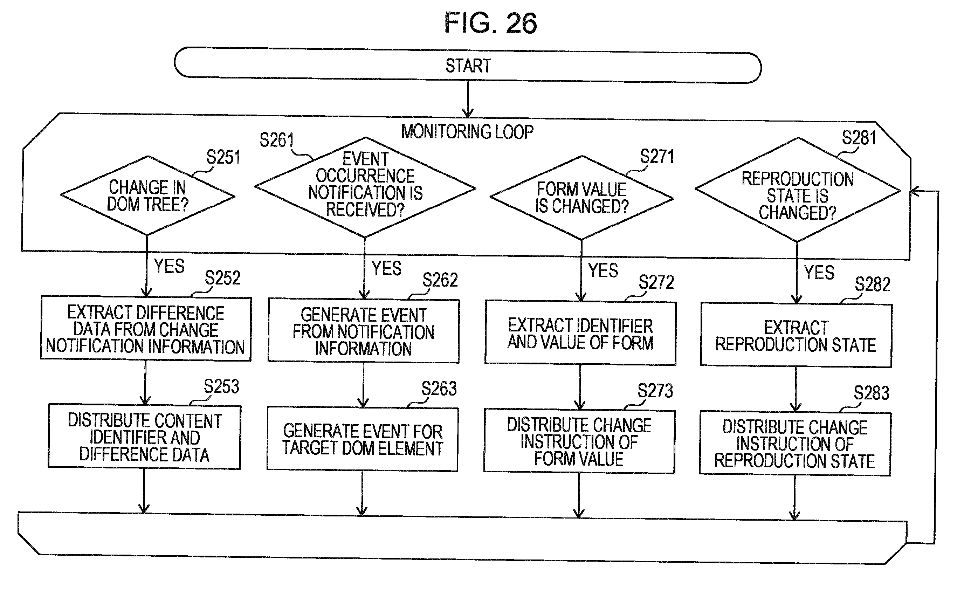

The processing of Step S220 in FIG. 24 is described below in detail. FIG. 26 is a flowchart illustrating an example of a processing procedure of event standby processing.

When an event handler that is used to monitor a change in the DOM tree is called (Yes in S251), the change monitoring unit 117 extracts difference data from information that is related to an event that has been detected by the event handler (hereinafter referred to as "change notification information") (S252). That is, the difference data is included in MutationEvent.

The data distribution unit 118 distributes the content identifier and the difference data, to each of the display terminals 20 (S253).

In addition, when an event handler that is used to monitor reception of event occurrence notification from any one of the display terminals 20 is called (Yes in S261), the change monitoring unit 117 generates a pseudo-event based on the information that has been notified by the event occurrence notification (S262). After that, the generated event is caused to occur for a DOM element that has been set as a target of an event that is indicated by the event occurrence notification (S263). As a result, the DOM tree is changed on the mobile terminal 10 side. The change in the DOM tree is detected in Step S251. Thus, after Step S262, the processing of Step S252 and the subsequent steps is executed. That is, the change in the DOM tree, which is detected in Step S251, is caused by an operation in the mobile terminal 10, or caused by an operation in the display terminal 20.

In addition, when an event handler that is used to monitor a change in a form value of a form element is called (Yes in S271), the change monitoring unit 117 extracts an identifier of a form element the form value of which has been changed (hereinafter referred to as "target element") and the form value after the change, from the target element (S272). The identifier of the form element may be a value that indicates the ordinal number of an element on the form. Alternatively, a selector of CSS, xpath, or the like may be used as the identifier. After that, the data distribution unit 118 distributes a change instruction of the form value, to each of the display terminals 20 (S273). The instruction includes a content identifier, an identifier and a form value of the target element. As a result, in each of the display terminals 20, the form value of the target element is changed.

In addition, when an event handler that is used to monitor a change in the reproduction state of a movie of a video element is called (Yes in S281), the change monitoring unit 117 extracts an identifier of the video element (hereinafter referred to as "target element"), and information that indicates the reproduction state of the movie after the change, from the target element (S282). After that, the data distribution unit 118 distributes a change instruction of the reproduction state of the movie, to each of the display terminals 20 (S283). The instruction includes a content identifier, and information that indicates the reproduction state of the movie and an identifier of the target element. As a result, in each of the display terminals 20, the reproduction state of the movie of the target element is changed.

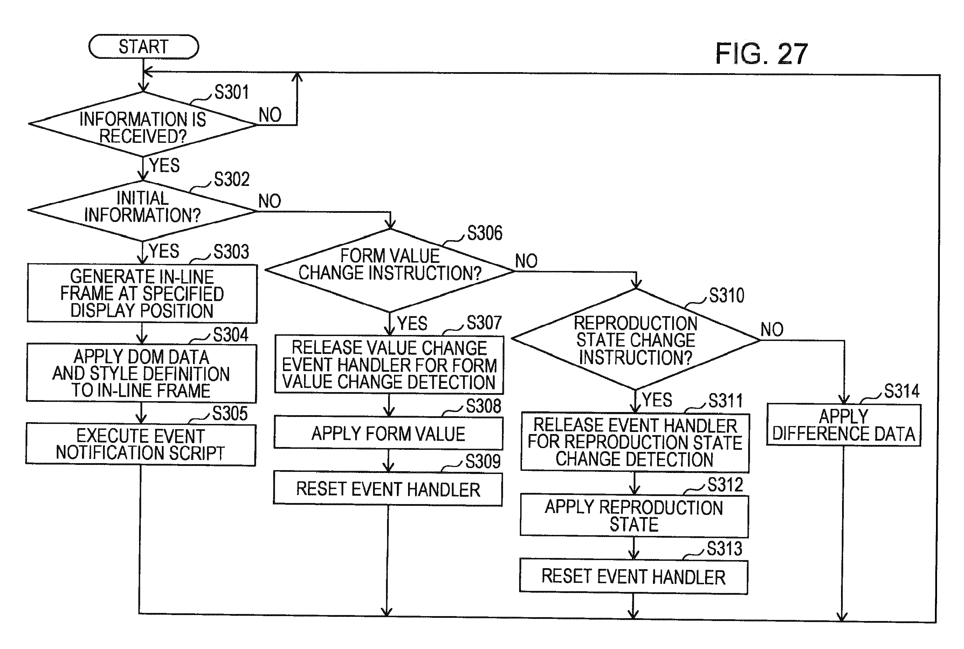

Processing that is executed by the display terminal 20 is descried below. FIG. 27 is a flowchart illustrating an example of a processing procedure that a synchronous data reception script causes the display terminal to execute. In FIG. 27, it is assumed that reading of a synchronous data reception script has been already performed.

The data reception unit 211 waits for reception of information from the mobile terminal 10 (S301). When certain information is received from the mobile terminal 10 (Yes in S301), the data reception unit 211 determines whether or not the received information is initial information (S302). The initial information corresponds to the content identifier, the DOM data m1, the style definition data c1, the event notification script sc1, the display position information, and the like that are distributed from the mobile terminal 10 to each of the display terminals 20 in Step S215 of FIG. 24.

When the initial information is received (Yes in S302), the display area generation unit 212 causes the content drawing unit 215 to generate an inline frame (iframe) having the position and size that are indicated by the display position information (S303). That is, in the embodiment, as an example of the above-described display area, not a window of a Web browser, but the inline frame is used. The inline frame is a frame that is used to display a certain Web content in a further Web content. An image in the same display state is reproduced based on the same DOM data and style definition data in an inline frame having the same size because the image may be displayed independent of the outside of the inline frame. Thus, for example, when the integration display D2 (FIG. 13) is achieved, there is an advantage that it is highly probable that connection of images on the displays may be smoothly performed. However, instead of the inline frame, a window of a Web browser may be generated.

The display state application unit 214 applies the content identifier, the DOM data m1, and the style definition c1, to the content drawing unit 215 (inline frame) (S304). As a result, the image of the Web content is displayed in the inline frame. In addition, the content identifier is associated with the inline frame. When a video element is included in a DOM tree that is reproduced based on the DOM data m1, a movie content is obtained based on an absolute path name of the video element, and reproduced.

The event handler setting unit 213 executes the event notification script sc1 (S305). The event notification script sc1 causes the display terminal 20 to function as the event transmission unit 216.

On the other hand, when the received information is not initial information (No in S302), the data reception unit 211 determines whether or not the received information is a change instruction of a form value (S306). The change instruction of the form value is transmitted in Step S273 of FIG. 26.

When the change instruction of the form value is received (Yes in S306), the display state application unit 214 releases setting of an event handler that is used to monitor a change in the form value, for a form element of an identifier that is included in the change instruction (hereinafter referred to as "target element"), from among form elements that are displayed in the inline frame that is associated with a content identifier that is included in the change instruction (S307). After that, the display state application unit 214 applies the form value that is included the change instruction, to the target element (S308). The purpose of the processing of Step S307 is to avoid an occurrence of a loop of event notification such as notification of a change in the form value executed by the processing of Step S308 to the mobile terminal 10 and notification of the change in the form value from the mobile terminal 10.

The display state application unit 214 resets the event handler the setting of which has been released in Step S307, to the target element (S309).

When a change instruction of the reproduction state of a movie content is received (Yes in S310), the display state application unit 214 releases setting of an event handler that is used to monitor a change in the reproduction state of a movie content, for a video element of an identifier that is included in the change instruction (hereinafter referred to as "target element"), from among video elements that are displayed in an inline frame that is associated with a content identifier that is included in the change instruction (S311). The purpose of the processing of Step S311 is similar to the processing of Step S307. After that, the display state application unit 214 applies the reproduction state of the movie content that is included in the change instruction, to the target element (S312).

After that, the display state application unit 214 resets the event handler the setting of which has been released in Step S311, to the target element (S313).

In addition, when the received information is difference data (No in S310), the display state application unit 214 applies the difference data to an inline frame of the content identifier that has been received with the difference data (S314). As a result, the display state of an image in the inline frame is synchronized with the display state of the mobile terminal 10.

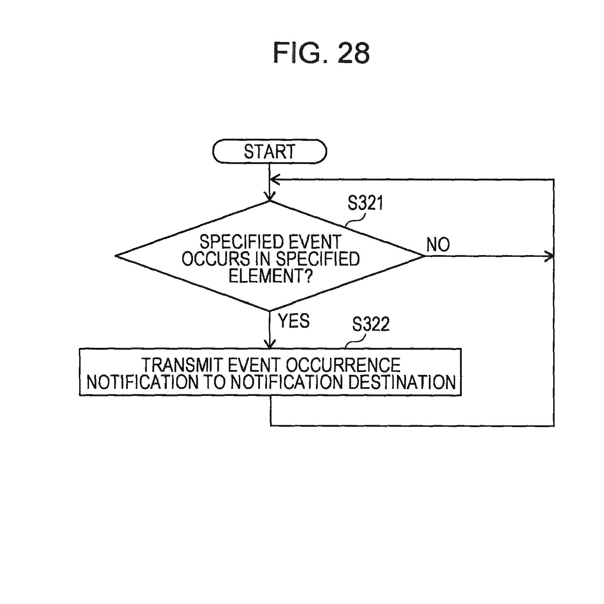

FIG. 28 is a flowchart illustrating an example of a processing procedure that an event notification script causes a display terminal to execute.

The event transmission unit 216 waits for an occurrence of an event (S321). When a certain event handler that is included in an event notification script is called (Yes in S321), the event transmission unit 216 transmits event occurrence notification to the mobile terminal 10 that is specified as a notification destination, in accordance with definition of the event handler. In the event occurrence notification, information that indicates a DOM element that is set as a target of the event, information that indicates the type of the event, and the like are included.

In the embodiment, the example is described in which the mobile terminal 10 and each of the display terminals 20 are communicated with each other directly, but the communication between the mobile terminal 10 and each of the display terminals 20 may be mediated or relayed through a signaling server, a Simple Traversal of UDP through NATs (STUN) server, a Traversal Using Relay NAT (TURN) server, or the like.

In addition, in the embodiment, the example is described in which an event handler is extracted by the event handler extraction unit 113, and an event notification script sc1 is generated based on the extracted event handler. However, these pieces of processing may be omitted. For example, each of the display terminals 20 may monitor all events for all DOM elements, and notify the mobile terminal 10 of occurrences of all of the events. However, in this case, each of the display terminals 20 notifies the mobile terminal 10 of all of the events, so that it is probable that the amount of communication data is increased. That is, due to extraction of an event handler by the event handler extraction unit 113, a desired event is merely notified from the display terminal 20 to the mobile terminal 10, so that an increase in the amount of communication data may be suppressed.

In addition, in the embodiment, the example is described in which the script generation unit 114 of the mobile terminal 10 generates an event notification script sc1, but the generation of the script may be performed by the display terminal 20. In this case, the mobile terminal 10 may distribute information that is desired to generate the event notification script sc1, to each of the display terminals 20. As such information, there is an extraction result by the event handler extraction unit 113.

In addition, in the embodiment, for convenience of description, the example is described in which the display states of the Web contents are synchronized between the mobile terminal 10 and the display terminal 20, but devices between which the Web contents are synchronized may be devices being the same type. For example, instead of the display terminal 20, the mobile terminal 10 may be used. In addition, instead of the mobile terminal 10, a Personal Computer (PC) or the like may be used.

In addition, a terminal as the mobile terminal 10 may not include the display device 106. That is, the terminal may not be a terminal that is used to browse a Web content by the user. Even in such a case, between a plurality of display terminals 20, the display states may be synchronized with each other.

As described above, in the third embodiment, even when any terminal is set as an operation target from among a plurality of terminals, the display states of the same Web content may be synchronized with each other.

In addition, the processing that is executed in the mobile terminal 10 or the display terminal 20 is executed by a script such as a synchronous data distribution script, a synchronous data reception script, or an event notification script. Thus, as long as each of the terminals includes a function of a generic Web browser, the embodiment may be achieved.

In addition, in the embodiment, differently from a remote desktop technology such as Virtual Network Computing (VNC), data distribution by streaming is not performed, and distribution of structure data such as DOM data and style definition is performed. Thus, an increase in load of data processing and network communication may be suppressed. In addition, a probability of an occurrence of a problem based on a difference of resolutions such as display collapse may be reduced.

In addition, based on a single Web content, an event handler for the display terminal 20 is automatically generated, so that the necessity of development of respective Web contents for the mobile terminal 10 and the display terminal 20 may be reduced.

In the third embodiment, examples of usage of the first layer script and the second layer script are merely described. Reference information of a script that causes the mobile terminal 10 to execute processing that is different from that of the third embodiment may be inserted into an HTML file depending on the state of the user.

In each of the above-described embodiments, the mobile terminal 10 is an example of an information processing terminal. The information management server 40 is an example of an information management device. The HTML file is an example of content data. The application information obtaining unit 121 is an example of a reception unit. The content obtaining unit 111 is an example of an obtaining unit and a first reception unit in claim 4. The content URL is an example of a first URL. The first layer script URL and the second layer script URL are examples of a second URL. The content server 30 is an example of a content management device. The application information obtaining unit 33 is an example of a second reception unit. The content management unit 31 is an example of a send-back unit.

As described above, the embodiments are described in detail using the specific examples, but the embodiments discussed herein are not limited to such specific examples, and various modifications and changes are allowed to be performed within the scope of the present disclosure described in the claims.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. An information processing system comprising:
an information processing terminal, and
an information management device connected to the information processing terminal through a network; wherein
the information processing terminal includes:
a reception unit configured to transmit identification information based on one of information that is input to the information processing terminal and information that is detected by the information processing terminal, to the information management device, and receive a first URL that is stored in the information management device so as to be associated with the identification information and one or more second URLs for a script that causes the information processing terminal to execute processing that is related to content data of the first URL, from the information management device,
an obtaining unit configured to obtain the content data of the first URL that is received by the reception unit through the network, and
an insertion unit configured to insert reference information for the second URL into the content data that is obtained by the obtaining unit.

2. The information processing system according to claim 1, wherein
the insertion unit is configured to insert reference information for the second URL in which reference information is not included in the content data that is obtained by the obtaining unit, from among the one or more second URLs, into the content data.

3. The information processing system according to claim 1, wherein
the insertion unit is configured to insert reference information for the second URL that is selected by a user in the information processing terminal, from among one or more the second URLs that are received by the reception unit, into the content data that is obtained by the obtaining unit.

4. An information processing system comprising:
an information processing terminal;
a content management device; and
an information management device, wherein
the information processing terminal, the content management device, and the information management device are connected to each other through a network, and
the information processing terminal includes:
a first reception unit configured to transmit identification information based on one of information that is input to the information processing terminal and information that is detected by the information processing terminal, and a first URL, to the content management device, and receive content data of the first URL, from the content management device, and
the content management device includes:
a second reception unit configured to transmit the first URL and the identification information that are received from the information processing terminal, to the information management device, and receive one or more second URLs, for a script that causes the information processing terminal to execute processing that is related to the content data of the first URL, stored in the information management device so as to be associated with the identification information and the first URL, from the information management device,
an insertion unit configured to insert reference information for the second URL, into the content data of the first URL that are stored in the content management device, and
a send-back unit configured to send back the content data into which the reference information is inserted by the insertion unit, to the information processing terminal.

5. An information processing terminal that is connected to an information management device through a network, the information processing terminal comprising:
a reception unit configured to transmit identification information based on one of information that is input to the information processing terminal and information that is detected by the information processing terminal, to the information management device, and receive a first URL that is stored in the information management device so as to be associated with the identification information and one or more second URLs for a script that causes the information processing terminal to execute processing that is related to content data of the first URL, from the information management device;
an obtaining unit configured to obtain the content data of the first URL that is received by the reception unit through the network;
an insertion unit configured to insert reference information for the second URL, into the content data that is obtained by the obtaining unit.

6. A content management device that is connected to an information processing terminal and an information management device through a network, the content management device comprising:
a second reception unit configured to transmit identification information based on one of information that is input to the information processing terminal and information that is detected by the information processing terminal and a first URL to the information management device, and receive one or more second URLs, for a script that causes the information processing terminal to execute processing that is related to content data of the first URL, that is stored in the information management device so as to be associated with the identification information and the first URL;
an insertion unit configured to insert reference information for the second URL into the content data of the first URL stored in the content management device; and
a send-back unit configured to send back the content data into which the reference information is inserted by the insertion unit, to the information processing terminal.

7. An information processing method in an information processing system that includes an information processing terminal and an information management device that are connected to each other through a network, the information processing method comprising:
transmitting identification information based on one of information that is input to the information processing terminal and information that is detected by the information processing terminal, to the information management device, and receiving a first URL that is stored in the information management device so as to be associated with the identification information, and one or more second URLs for a script that cause the information processing terminal to execute processing that is related to content data of the first URL, from the information management device, by the information processing terminal;
obtaining the content data of the received first URL through the network, by the information processing terminal; and
inserting reference information for the second URL, into the obtained content data, by the information processing terminal.

8. An information processing method in an information processing system that includes an information processing terminal, a content management device, and an information management device that are connected to each other through a network, the information processing method comprising:
transmitting identification information based on one of information that is input to the information processing terminal and information that is detected by the information processing terminal, and a first URL, to the content management device, and receiving content data of the first URL, from the content management device, by the information processing terminal;
transmitting the first URL and the identification information that are received from the information processing terminal, to the information management device, and receiving one or more second URLs for a script that cause the information processing terminal to execute processing that is related to the content data of the first URL that is stored in the information management device so as to be associated with the identification information and the first URL, from the information management device, by the content management device;
inserting reference information for the second URL, into the content data of the first URL, from among pieces of content data that are stored in the content management device, by the content management device; and
sending back the content data into which the reference information is inserted, to the information processing terminal, by the content management device.
